# EUROPEAN PATENT APPLICATION

(11) **EP 2 687 492 A1**
(43) Date of publication of application: **22.01.2014**
(21) Application number: 11755622.5
(22) Date of filing: 15.03.2011
(51) Int. Cl.: C03C 3/062, C03C 3/064, C03C 3/087, C03C 3/091, C03C 3/112, C03C 3/118

(54) **PLATE GLASS WITH COLORFUL GLAZE LAYER AND MANUFACURING PROCESS THEREOF**

(71) Applicant: Yang, Dening, Shenzhen, Guangdong 518053 (CN)
(72) Inventor: Yang, Dening, Shenzhen, Guangdong 518053 (CN)
(74) Representative: Jeannet, Olivier
(86) International application number: PCT/CN2011/000413
(87) International publication number: WO 2011/113305

(57) **Abstract**

The plate glass having high annealing temperature, high strength, excellent flatness, low viscosity and manufacturing process thereof are provided. The melting point of the colorful glaze layer with 1-10 colors on the surface of the plate glass is 540-730 °C. The plate glass contains(in mass%) boron oxide 0-3.9%, sodium oxide 0.01-14%, iron oxide 0.01-5%, fluorine oxide 0-2.8%, magnesia 8.1-22.2%, alumina 0.01-39%, wherein the content of silica is 1.9-4.1 times that of calcium oxide, the content of calcium oxide content is 1.2-1.6 times that of magnesia.

## Description

### Technical field

The present invention relates to various innovative technical solutions applied to glass, specifically the decorative glass in prior art, and substitute ceramic plates, ceramic tile, aluminum plastic plate, decorative plastic laminated board, resin-containing artificial stone board, and various decorative boards in home and project application such as inner wall, outer wall, ground, desk panel and cabinet panel, the various decorative plate are provided with all preset and indispensable compositions in a special scope such as Na₂O, Fe₂O₃, Al₂O₃, SiO₂, CaO, MgO or TiO₂ and BaO and raw materials whose special ratios are preset among SiO₂, CaO and MgO, and the contents of boron or sodium is omitted, solving various conventional technologies that lots of sodium or boron compositions must be adopted in order to form the fluxing composition and the eutectoid composition [the lower limit of annealing temperature (endothermic peak threshold temperature) of soda-lime glass is 490°C]which accounts for 99.9% of the total output of the existing flat glass, and the unexpected low-sodium and boron-free compositions can be generated, and the colored glazing glass can be produced with economy and low cost, the low limit (endothermic peak threshold temperature) of the annealing temperature in the prior art is 50°C-200°C, the substrate glass at temperature above 150°C-200°C can be selected, the glass produced in the conventional unique flat glass alkali-free boron glass technical solution at high annealing temperature lower limit (endothermic peak threshold temperature) is high, and the product is 80-100 times above that of the conventional flat soda-lime glass, it is clear that only the glass provided by the present invention has the cost economic feasibility in preparation of the colored glazing decorative material, and the strength is raised by 1-3 time(s), therefore, the a colored glazing flat glass which features high annealing temperature, high strength, environmental protection, energy saving and low melting point and preparation method have large-production controllable cost, can ensure the operation of sintering the glaze below the annealing point, and have the unprecedented technical natures of being free from normal breaking and yield.

### Background art

More decorative materials or bricks for wall and ground nowadays are provided and are all of related significant defects shown as follows:
(1). The general soda-lime glass, the decorative glass and the glass mosaic are mainly defected in that, [1] the expansion coefficient has no linear variation characteristics, so that the variation difference is large, the annealing point lower limit is the endothermic peak starting point (about 490°C in general),Industry insiders know that it is difficult to prepare the inorganic glaze with melting point less than 490°C, if the inorganic glaze more than 490°C is used for printing the decorative pattern, the glass product will be deformed, specifically, the secondary annealing process is hardly controlled, resulting in large bursting rate, and industry insiders also know that the glass will suddenly vary in an expansion way at the temperature close to about the temperature of the strain point, which is the main technical barrier that fine and applicable inorganic glaze sintered pattern printing point cannot be prepared by all the existing soda-lime glass. Only the mosaic products with relatively small size can be prepared (poor annealing and bursting can be avoided under the dimension less than 5cm); [2]only the single-color tempered printing glass (the problem due to annealing can be overcome by generating surface tension) is applicable. However, the conventional technical tempered glass products cannot be prepared into various standard boards of 2,400x1,200m in order to be cut into any other dimensions by the end user as requirement; [3]the melting points of the existing colored glazing tempered glass glaze and all the mosaic glass glaze are at 760°C-820°C, the corner is turned round in order to meet the temperature in which the glass is softened and deformed a little during being tempered as well as meeting that the mosaic glass is softened, which is the known technology; [4]the hardness and the wear resistance are poor, the strength is only about 45-50MPa, so the glass cannot be used as the home and project ground; [5]the viscosity is 10^{0.5} P·s and 10¹ P•s melting temperature, which cannot be measured by THETA high-temperature rotary viscosimeter, only the melting temperature of about 1,580°C can be detected at viscosity of 10^{1.5} P•s, so the defects of being hard to melt and large in energy consumption are generated (energy consumption in melting and forming per kg is up to 1,500 kilocalories); [6] the fireproof effect is poor, and cracks are often found.
(2). The conventional aluminum plastic board decorative material is always formed by clamping a plastic plate between two thin aluminum plates and is characterized in that, [1] the plastic layer I the middle will be seriously deformed while being used outdoor due to being exposed to the sun and rain and the variation of the temperature difference, in addition, the aluminum plastic plate is soft, thin, poor in straightness and flatness; and the plastic layer cannot completely reach the flatness and the smooth finish just like a mirror of glass product and ceramic product. [2] The stone patterns printed on the surface just can be prepared through organic material, which are essentially easily aged and discolored, so the aluminum plastic board decorative material just can be used indoor, and the use outdoor cannot be carried out;
(3). Decorative plastic laminated board is defected in that, [1] the prepared pattern cannot meet the flatness and the smoothness just like the mirror; [2]the decorative plastic laminated board cannot be used as the ground because of the poor wear resistance; [3]the fireproof and flame-proof effects are not provided; [4]the product cannot be used outdoor, otherwise, the product is hardly aged and easily deformed. The decorative plastic laminated board used or decorating the surface in project or the home decoration project or the surface of the wooden furniture has serious defects.
(4). Ceramic board and ceramic tile are defected in that, [1] all the existing ceramic boards are extruded or pressed into blanks through the clay and then dried or sintered, 0.3mm-1.6mm or 2-3mm ultra-thin products cannot be produced at mass production, and the dimension in mass production just can reach 1,800×900mm×(5-6)mm, and the products with dimension more than 2,400×1,200mm×(2-3)mm or 3mm or more than 3mm cannot be produced;[2]the product has the strength less than 50MPa, so the product is easily damaged during constructing and transporting, and the thickness of 99.99% of ceramic tile product is 9 to 15mm; [3]the water absorption is relatively large and reaches 0.5-0.1%, the drainage is easily absorbed; [4]the sintering temperature reaches 1,100°C-1,200°C during printing pattern on the glaze, so the crystal phone (molten) of the quartz crystal cannot be remained, and as a result, the product is poor in hardness, and no wear resistance is provided; [5]large energy consumption, large emission of the dust, carbon dioxide and sulfur dioxide in production are determined in the process, the raw material and the finished product are large in weight, so that the transportation cost is high, the energy consumption in transportation is large, lots of water sources are wasted, large area is occupied, the efficiency is low, the product production is carried out through the modern ceramic production equipment system under the water ball mill process" the spray tower process, the ceramic press process, the water polishing process and the edging process, the energy consumption is large, the emission of the dust and the pollutant gas is high, the water is highly consumed, so the production technology for preparing the ceramic product under the conventional equipment system has high limit and defects at the present that all the countries propose green, economy, energy saving, environmental protection, low carbon and economy, and is needed to be updated and replaced by new product.
(5). The natural stone is defected in that, [1] the environmental protection is not realized, the radioactive elements are generated; [2]the weight is large, the natural stone just can be subjected to dry hanging on the wall surface while the thickness is more than 25mm during being applied to the external wall; and [3]the high-level natural stone source is increasingly reduced.
(6). Artificial stone and decorative glass, are defected in that, the output and the effect of the artificial stone are low, and the cost is high; however, all the pattern glazes of the decorative glass are the organic materials which are easily discolored and relatively poor in wear resistance (the artificial stone and the decorative glass cannot be used as the external wall and the ground, the tempered printing pattern colored glass cannot be used as the product with customized dimension, and cannot be cut, the current inorganic glaze pattern glass just can be used as the glass mosaic with dimension within 5cm, larger dimension will influence the secondary annealing due to the annealing point of about 490°C of the soda-lime glass, resulting in bursting, and the mass production of the inorganic glass glaze less than 490°C is impossible, thus, the technical problems are proposed to be overcome by more than 5cm products which has glass mosaic and fine pattern, has standard dimension and can be randomly cut.
(7). In addition, there is "crystallized glass having natural-marble-like surface patterns and method of producing the same" with a publication number CN1053047A, its process rather than the product compositions has determined its inevitable product defects.
   1. Its process is stated as: collect the small frit in molding case, have... crystal entered from the glass surface into the internal part, the frits are melted and mixed, control the frit size..., obtain the appearances of marble and granite patterns, in this document, a lot of statements are about crystallization process, so it can be seen that it adopts a neoceramic glass process with color patterns for granule viscous-melt crystallization.
      A. Its color patterns and non-transparency is obviously not determined by material compositions, the product's crystal, colors and patterns are determined by adding every glass granule from its surface to the internal part with the process method stated in the application document; therefore, every granule is filled with crystals from outside to inside, it is not transparent at all, so it is impossible to make such a product which has good visible light transmittance of 40%-95%; theses defects need to be overcome.
      B. In its process, it is made with different granular materials to have its glass material softened, deformed and melted each other...meanwhile, the separated glass crystal conforms to the size and shape of small frits (see P7). The insiders all know that the uppermost defect is that the product is loose when granules are distributed, so the sintered product has a lot of uneven parts on its surface; like all neoceramic glass, this kind of granules are growing, various granule shapes make the surface unevenness remain between 0.5mm-1.5mm; moreover, in this frame forming process, the product surface is rather uneven, the frame is sintered with refractory material, the unevenness of its surface and quadrangles is more and more significant as it is sintered and deformed each time, so the thickness difference of its finished product goes between 1.5mm-2mm, both sides of all the products need to be slicked and polished with the thickness of at least 1mm-2mm; even if they are slicked and polished, the thickness difference of its product is more than 1mm as well, so it suffers significant defect and waste. This is a far difference from the thickness difference within 0.3mm for the glass of the present invention and the normal flat glass. This defect is completely caused by its process rather than material compositions, so these defects need to be overcome.
(8). The PDP and the alkali-free boron glass in the prior art are topically the US2002/0011080A1, and have relatively high strain point, however, the technical solution is defected in that I, the product contains B₂O₃ up to 5-20%, so the more two times boron are volatilized to result in non-uniformity of the compositions, which bring large damage to the environmental protection, the product is low in intensity which only reaches 45-50MPa; II, the production cost is relatively high, and the viscosity, it is hard to melt, remove bubble and form, so the glass cannot be used as the decorative glass by comparing with the electronic display glass which has the price 50-100 times higher than the float flat soda-lime glass, and no publicity or cases about the colored glazing glass are provided.

In view of the defects and the shortcomings in the prior art, the inventor expects to overcome the shortcomings and the defects in the prior art based on multi-year experience and professional on design and manufacture of like products and according to active research and innovation, and provides an innovative technical solution after solving the complex production technology, all preset and indispensable compositions in a special scope such as Na₂O, Fe₂O₃, Al₂O₃, SiO₂, CaO, MgO or TiO₂ and BaO and raw materials whose special ratios are preset among SiO₂, CaO and MgO, and the technical preconception on various conventional constituent fluxing compositions and eutectoid compositions, the unexpected fluxing or eutectoid functions can be generated, the strength of the produced product is raised by 1-3 time(s), the environment is protected, the energy is saved, and the emission is reduced, in addition, the high-annealing temperature high-strength environmentally friendly and low melting point colored glazing flat glass of the colored glazing with melting point of 540°C-730°C is attached on the glass substrate.

### Summary

The present invention provides a colored glazing flat glass which features high annealing temperature, high strength, environmental protection, energy saving and low melting point, the melting point of the colored glazing layer with 1-10 color(s) on the surface of its substrate glass is 540-730°C, and the substrate glass of its product is characterized in that: the said substrate glass contains SiO₂, CaO, MgO, Al₂O₃, Fe₂O₃ and Na₂O; calculated as per weight percentage, the said substrate glass contains B₂O₃ 0-3.9%, Na₂O 0.01-14%, Fe₂O₃ 0.01-5%, F₂O 0-2.8%, MgO 8.1-22.2%, and Al₂O₃ 0.01-39%, wherein the content of SiO₂ is 1.9-4.1 times that of CaO, and the content of CaO 1.2 -1.6 times that of MgO; the thickness difference of the said substrate glass is less than 0.3mm; the water absorption of the said substrate glass goes between 0- 0.3%; the flexural strength of the said substrate glass is up to 50-180Mpa; the lower limit of annealing temperature (endothermic peak threshold temperature) of the said substrate glass goes between 550°C-710°C.

According to a colored glazing flat glass which features high annealing temperature, high strength, environmental protection, energy saving and low melting point in the first embodiment of the present invention, whose substrate glass of its product is characterized in that: calculated as per weight percentage, the content of Al₂O₃ is 3.1-39%.

According to a colored glazing flat glass which features high annealing temperature, high strength, environmental protection, energy saving and low melting point in the first embodiment of the present invention, whose substrate glass of its product is characterized in that: calculated as per weight percentage, the content of TiO₂ is 0.0003-4.9%.

According to a colored glazing flat glass which features high annealing temperature, high strength, environmental protection, energy saving and low melting point in the first embodiment of the present invention, whose substrate glass of its product is characterized in that: calculated as per weight percentage, the total content of SiO₂, CaO and MgO in it is 51-99.8%, and the content of BaO is 0.01-14%.

According to a colored glazing flat glass which features high annealing temperature, high strength, environmental protection, energy saving and low melting point in the first embodiment of the present invention, whose substrate glass of its product is characterized in that: calculated as per weight percentage, the content of Al₂O₃ is 0.01-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5}Pa·s, the temperature of the said substrate glass is 1,500°C-1,640°C; when the viscosity is 10¹ Pa•s, the temperature of the said substrate glass is 1,450°C-1,580°C; when the viscosity is 10² Pa•s, the temperature of the said substrate glass is 1,210°C-1,350°C; when the viscosity is 10³ Pa•s, the temperature of the said substrate glass is 1,070°C-1,230°C; the flexural strength of the said substrate glass is 50-180Mpa. According to a colored glazing flat glass which features high annealing temperature, high strength, environmental protection, energy saving and low melting point in the first embodiment of the present invention, whose substrate glass of its product is characterized in that: calculated as per weight percentage, the content of Al₂O₃ is 8-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,520°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,070°C-1,230°C; the flexural strength of the said substrate glass is 75-180Mpa. According to a colored glazing flat glass which features high annealing temperature, high strength, environmental protection, energy saving and low melting point in the first embodiment of the present invention, whose substrate glass of its product is characterized in that: calculated as per weight percentage, the content of Al₂O₃ is 19-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,550°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,080°C-1,230°C; the flexural strength of the said substrate glass is 130-180Mpa. According to a colored glazing flat glass which features high annealing temperature, high strength, environmental protection, energy saving and low melting point in the first embodiment of the present invention, whose substrate glass of its product is characterized in that: calculated as per weight percentage, the content of Al₂O₃ is 0.01-19%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,500°C-1,580°C; when the viscosity is 10¹ Pa·s, the temperature of the said substrate glass is 1,450°C-1,520°C; when the viscosity is 10² Pa·s, the temperature of the said substrate glass is 1,210°C-1,310°C; when the viscosity is 10³ Pa·s, the temperature of the said substrate glass is 1,070°C-1,160°C; the flexural strength of the said substrate glass is 50-145Mpa. According to a colored glazing flat glass which features high annealing temperature, high strength, environmental protection, energy saving and low melting point in the first embodiment of the present invention, whose substrate glass of its product is characterized in that: the content of CaO is 1.3 -1.6 times that of MgO, the content of SiO₂ is 2.0-3.6 times that of CaO, the content of MgO is 10.1-19.9%, and the content of Al₂O₃ is 19-39%.

According to a colored glazing flat glass which features high annealing temperature, high strength, environmental protection, energy saving and low melting point in the first embodiment of the present invention, whose substrate glass of its product is characterized in that:
(1) Calculated as per weight percentage, in its substrate glass contents: ① MgO is 7-20%, ② the content of CaO is 1.0-1.8 time(s) that of MgO, ③ SiO₂ is 2.6-5.6 times that of MgO, ④ SiO₂ is 2.2-3.8 times that of CaO, ⑤Al₂O₃ is 0.1-30%, ⑥ Na₂O is 0-18%, ⑦BaO is 0-5%;
(2) The strain point temperature of the substrate glass of its product goes between 560°C-720°C;
(3) The water absorption of the substrate glass of its product goes between 0-0.001%;
(4) Calculated as per weight percentage, the total content of MgO, CaO and SiO₂ in the substrate glass of its product is 51%-100%.

According to a colored glazing flat glass which features high annealing temperature, high strength, environmental protection, energy saving and low melting point in the first embodiment of the present invention, characterized in that: the composite board of its product consists of a colored glazing flat glass which features high annealing temperature, high strength, environmental protection, energy saving and low melting point (1), binding material layer (2) and sheet metal (3) with the thickness of 0.1-1mm or 1-5mm.

According to a colored glazing flat glass which features high annealing temperature, high strength, environmental protection, energy saving and low melting point in the first embodiment of the present invention, whose substrate glass of its product is characterized in that: calculated as per weight percentage, the content of Al₂O₃ in its substrate glass is less than or equal to 30%; when the viscosity is 10^{0.5}Pa·s, the temperature of the said substrate glass is 1,480°C-1,640°C; when the viscosity is 10¹ Pa·s, the temperature of the said substrate glass is 1,410°C-1,600°C; when the viscosity is 10² Pa·s, the temperature of the said substrate glass is 1,180°C-1,340°C; when the viscosity is 10³ Pa·s, the temperature of the said substrate glass is 1,040°C-1,220°C; the thickness difference of the said substrate glass is less than 0.3mm; the water absorption of the said substrate glass goes between 0- 0.3%; the lower limit of annealing temperature (endothermic peak threshold temperature) of the said substrate glass goes between 550°C-710°C; the flexural strength of the said substrate glass is 50-180MPa; the difference of thermal expansion coefficient of the said substrate glass is 1.0-3.0ppm between 150°C-300°C; the difference of thermal expansion coefficient of the said substrate glass is 1.0-2.8ppm between 550°C-600°C.

According to a colored glazing flat glass which features high annealing temperature, high strength, environmental protection, energy saving and low melting point in the first embodiment of the present invention, whose product is characterized in that: the surface layer of the glaze layer contains 20-70% quartz crystal or Al₂O₃ crystal.

According to a colored glazing flat glass which features high annealing temperature, high strength, environmental protection, energy saving and low melting point in the first embodiment of the present invention, whose substrate glass of its product is characterized in that:
(1). Calculated as per weight percentage, in its substrate glass contents: ① MgO is 7-20%, ② the content of CaO is 1.0-1.8 time(s) that of MgO, ③ SiO₂ is 2.6-5.6 times that of MgO, ④ SiO₂ is 2.2-3.8 times that of CaO, ⑤Al₂O₃ is 0.1-30%, ⑥Na₂O is 0-18%, ⑦BaO is 0-5%;
(2). The strain point temperature of its product goes between 560°C-720°C;
(3). The water absorption of its product goes between 0-0.001%;
(4). Calculated as per weight percentage, the total content of MgO, CaO and SiO₂ in its product is 51%-100%.

According to a colored glazing flat glass which features high annealing temperature, high strength, environmental protection, energy saving and low melting point in the first embodiment of the present invention, whose substrate glass of its product is characterized in that:
(1). calculated as per weight percentage, in its product contents: ① the content of CaO is 0.6-2.4 times that of MgO, ② the content of SiO₂ is 1.3-5.8 times that of MgO, ③ the content of SiO₂ is 1.3-5.8 times that of CaO, ④ the content of Al₂O₃ is 0.1-30%, ® the content of Na₂O is 0-18%, ⑥ the content of BaO is 0-20%;
(2).The total content of MgO, CaO and SiO₂ in its product is 51%-99.9%;
(3).The water absorption of its product goes between 0-0.001%.

According to a colored glazing flat glass which features high annealing temperature, high strength, environmental protection, energy saving and low melting point in the first embodiment of the present invention, whose substrate glass of its product is characterized in that:
(1). Calculated as per weight percentage, in its product contents: ①MgO is 7-20%; ② the content of CaO is 1.0-1.8 time(s) that of MgO; ③SiO₂ is 2.6-5.6 times that of MgO; ④SiO₂ is 2.2-3.8 times that of CaO; ⑤Al₂O₃ is 0.1-30%; ⑥ Na₂O is 0-18%; ⑦BaO is 0-5%;
(2).The strain point temperature of its product goes between 560°C-720°C;
(3). The water absorption of its product goes between 0-0.001%;
(4). Calculated as per weight percentage, the total content of MgO, CaO and SiO₂ in its product is 51%-99.9%.

According to a colored glazing flat glass which features high annealing temperature, high strength, environmental protection, energy saving and low melting point in the first embodiment of the present invention, whose substrate glass of its product is characterized in that: calculated as per weight percentage, in its product: the content of CaO is 1.15-1.8 times that of MgO.

According to a colored glazing flat glass which features high annealing temperature, high strength, environmental protection, energy saving and low melting point in the first embodiment of the present invention, whose substrate glass of its product is characterized in that:
(1). Calculated as per weight percentage, in its product contents: ① MgO is 9.1-22%, ② the content of CaO is 0.6-2.0 time(s) that of MgO, ③ SiO₂ is 2.8-5.6 times that of MgO, ④SiO₂ is 2.3-3.8 times that of CaO, ⑤Al₂O₃ is 0.1-30%, ⑥ Na₂O is 0-18%, ⑦BaO is 0-5%;
(2).The strain point temperature of its product goes between 560°C-720°C;
(3). The water absorption of its product goes between 0-0.001%;
(4).Calculated as per weight percentage, the total content of MgO, CaO and SiO₂ in its product is 51%-99.9%.

According to a colored glazing flat glass which features high annealing temperature, high strength, environmental protection, energy saving and low melting point in the first embodiment of the present invention, whose substrate glass of its product is characterized in that: calculated as per weight percentage, when the content of Al₂O₃ in its product is 0-3.8%: the melting process temperature is 1,300°C-1,400°C at 10¹ Pa•s; the process temperature for clarified and bubble discharge is 1,120°C-1,260°C at 10² Pa•s; the forming process temperature is 1,010°C-1,060°C at 10³ Pa•s; the flexural strength of its product is up to 60-100Mpa.

According to a colored glazing flat glass which features high annealing temperature, high strength, environmental protection, energy saving and low melting point in the first embodiment of the present invention, whose substrate glass of its product is characterized in that: calculated as per weight percentage, when the content of Al₂O₃ in its product is 3.8-15%: the melting process temperature is 1,320°C-1,430°C at 10¹ Pa•s; the process temperature for clarified and bubble discharge is 1,140°C - 1,290°C at 10² Pa•s; the forming process temperature is 1,040°C-1,130°C at 10³ Pa•s; the flexural strength of its product is up to 80-130Mpa.

According to a colored glazing flat glass which features high annealing temperature, high strength, environmental protection, energy saving and low melting point in the first embodiment of the present invention, whose substrate glass of its product is characterized in that: calculated as per weight percentage, when the content of Al₂O₃ in its product is 15-23%: the melting process temperature is 1,360°C-1,550°C at 10¹ Pa•s; the process temperature for clarified and bubble discharge is 1,250°C-1,430°C at 10² Pa•s; the forming process temperature is 1,060°C-1,200°C at 10³ Pa•s; the flexural strength of its product is up to 100-180Mpa.

According to a colored glazing flat glass which features high annealing temperature, high strength, environmental protection, energy saving and low melting point in the first embodiment of the present invention, whose substrate glass of its product is characterized in that: the said glass contains SiO₂, MgO and CaO, and wherein, calculated as per weight percentage, in the said glass, the content of SiO₂ is 2.1-6.5 times that of MgO, and the content of SiO₂ is 1.8-4.6 times that of CaO;
The thickness difference of the said substrate glass is less than 0.3mm;
The water absorption of the said substrate glass goes between 0- 0.3%;
The flexural strength of the said substrate glass is up to 50-180Mpa.

According to a colored glazing flat glass which features high annealing temperature, high strength, environmental protection, energy saving and low melting point in the first embodiment of the present invention, whose substrate glass of its product is characterized in that: calculated as per weight percentage, in the said substrate glass, the content of SiO₂ is 2.6-5 times that of MgO, and the content of SiO₂ is 2.4-3.4 times that of CaO.

According to a colored glazing flat glass which features high annealing temperature, high strength, environmental protection, energy saving and low melting point in the first embodiment of the present invention, whose substrate glass of its product is characterized in that: calculated as per weight percentage, in the said substrate glass, the content of CaO is 1.0-1.6 time(s) that of MgO, preferentially 1.2-1.5 times.

According to a colored glazing flat glass which features high annealing temperature, high strength, environmental protection, energy saving and low melting point in the first embodiment of the present invention, the thickness of the substrate glass of its product is 0.3-1.8mm.

According to a colored glazing flat glass which features high annealing temperature, high strength, environmental protection, energy saving and low melting point in the first embodiment of the present invention, the thickness of the substrate glass of its product is 1.8-5mm.

According to a colored glazing flat glass which features high annealing temperature, high strength, environmental protection, energy saving and low melting point in the first embodiment of the present invention, the thickness of the substrate glass of its product is 5-20mm.

According to a colored glazing flat glass which features high annealing temperature, high strength, environmental protection, energy saving and low melting point in the first embodiment of the present invention, whose substrate glass of its product is characterized in that: calculated as per weight percentage, the content of Na₂O is 0.01-2%.

According to a colored glazing flat glass which features high annealing temperature, high strength, environmental protection, energy saving and low melting point in the first embodiment of the present invention, whose substrate glass of its product is characterized in that: calculated as per weight percentage, the content of Na₂O is 2.1-5%.

The second embodiment of the present invention has provided the preparation methods for a colored glazing flat glass which features high annealing temperature, high strength, environmental protection, energy saving and low melting point, characterized in that:
Step 1: all preset and indispensable compositions in a special scope such as Na₂O, Fe₂O₃, Al₂O₃, SiO₂, CaO, MgO or TiO₂ and BaO and raw materials whose special ratios are preset among SiO₂, CaO and MgO in the innovative technical solution are configured by the substrate glass compositions of its product as set forth in any of Claims 1 to 6; after being mixed and stirred, they are melted under the melting temperature for each glass formula to form the liquid glass with controllable viscosity and optimized low viscosity, then they are homogenized and clarified and discharge bubbles to form flowing molten mass;
Step 2: the glass is molded by adopting float process, horizontal drawing process, Glaverbel process, calendaring process or overflow process, and the substrate glass of a colored glazing flat glass which features high annealing temperature, high strength, environmental protection, energy saving and low melting point is manufactured after going through the cooling procedure;
Step 3: Print or spread a layer of colored glaze with 1 or 2-10 color(s) and a melting point of 540°C-730°C on the surface of the substrate glass of the formed product to form a decorative layer.

A colored glazing flat glass which features high annealing temperature, high strength, environmental protection, energy saving and low melting point w melting point colored glazing flat glass in the embodiment of the present invention, is characterized in that, the colored glazing pattern decorative layer on the surface of the product is provided with 2-100 sets, each set comprises a single product printing device unit composed of 1-10 plant mesh printing or roller printing devices or ink jetting printing devices which are arranged in parallel, the surface of the substrate glass of a colored glazing flat glass which features high annealing temperature, high strength, environmental protection, energy saving and low melting point is printed with the colored glazing, then the glaze is sintered, the prepared products in the same batch enable the surface of 2-100 products to prepare a colored glazing flat glass which features high annealing temperature, high strength, environmental protection, energy saving and low melting point product with 1-10 color(s) and being preset with different printing patterns or colored glazing decorative layers.

According to the process method in the embodiment of the present invention, wherein: 2-4 edges of the sheet metal at the back and bottom of the composite board of its product extend 10-30mm longer than the edge of the overlapped a colored glazing flat glass which features high annealing temperature, high strength, environmental protection, energy saving and low melting point product with its surface glazed.

### Description of figures

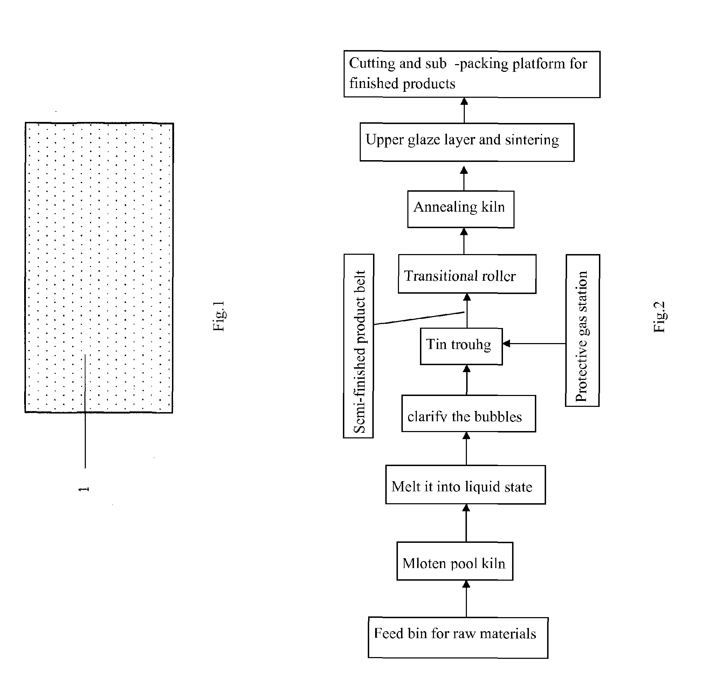

Fig. 1 is a plan diagram of a colored glazing flat glass which features high annealing temperature, high strength, environmental protection, energy saving and low melting point and the substrate glass of a colored glazing flat glass which features high annealing temperature, high strength, environmental protection, energy saving and low melting point in the embodiments of the preparation method.
Fig. 2 is a flow diagram of a float process forming of preparation process of a colored glazing flat glass which features high annealing temperature, high strength, environmental protection, energy saving and low melting point and the substrate glass of a colored glazing flat glass which features high annealing temperature, high strength, environmental protection, energy saving and low melting point in the embodiments of the preparation method.

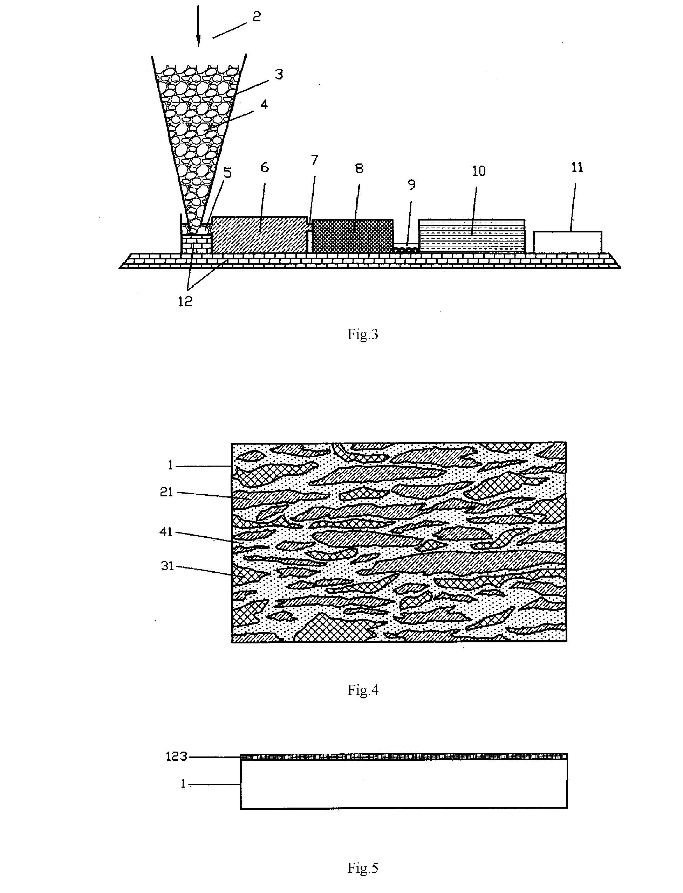

Fig. 3 is a side section diagram of a float process forming state of preparation process of a colored glazing flat glass which features high annealing temperature, high strength, environmental protection, energy saving and low melting point and the substrate glass of a colored glazing flat glass which features high annealing temperature, high strength, environmental protection, energy saving and low melting point in the preparation method.
Fig. 4 is a plan diagram of the plan diagram of the substrate glass product of a float process forming state of preparation process of a colored glazing flat glass which features high annealing temperature, high strength, environmental protection, energy saving and low melting point which has the dimension of 1,220mm×2,440mm, is formed by the printed and three-color area preset colored glazing in the surface layer and has a the preset colored glazing pattern decorative layer under a float process forming state of preparation process of a colored glazing flat glass which features high annealing temperature, high strength, environmental protection, energy saving and low melting point and preparation method of the embodiment of the present invention.
Fig. 5 is a sectional diagram of the substrate glass product of a float process forming state of preparation process of a colored glazing flat glass which features high annealing temperature, high strength, environmental protection, energy saving and low melting point which has the dimension of 1,220mm×2,440mm and thickness of about 2-5mm, is formed by the printed and three-color area preset colored glazing in the surface layer and has a the preset colored glazing pattern decorative layer being 0.1-1mm in thickness under a float process forming state of preparation process of a colored glazing flat glass which features high annealing temperature, high strength, environmental protection, energy saving and low melting point and preparation method of the embodiment of the present invention.

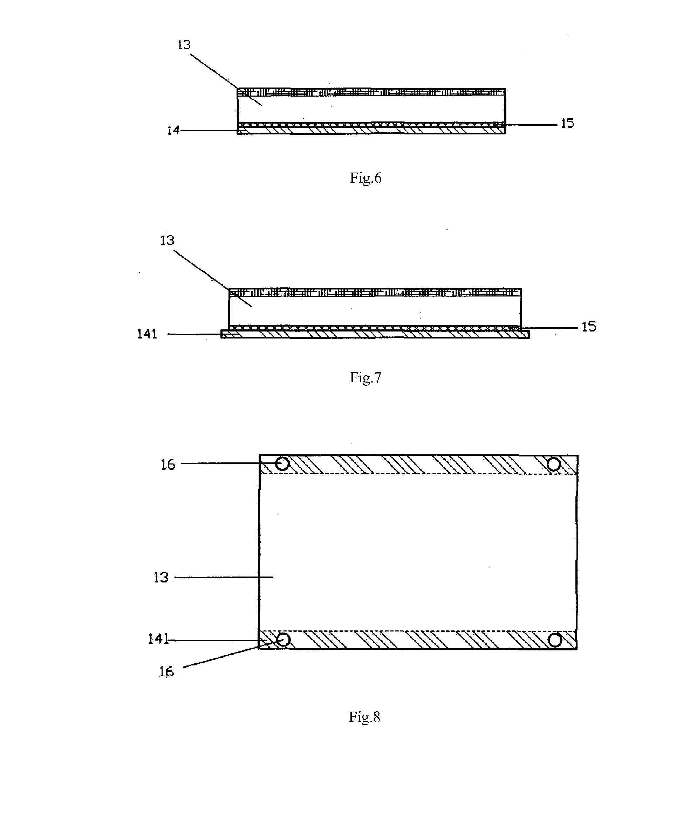

Fig. 6 is a structure schematic diagram of the section of the novel composite boarded combined by adhering and combing aluminum plates with adhesive which is provided with a float process forming state of preparation process of a colored glazing flat glass which features high annealing temperature, high strength, environmental protection, energy saving and low melting point as the surface layer, is overlapped in rear surface and is not beyond the dimension of the surface silicate colored glazing decorative glass in the back side part under the embodiment of a float process forming state of preparation process of a colored glazing flat glass which features high annealing temperature, high strength, environmental protection, energy saving and low melting point and preparation method of the present invention.
Fig. 7 is a structure schematic diagram of the section of the novel composite boarded combined by adhering and combing aluminum plates which is provided with a float process forming state of preparation process of a colored glazing flat glass which features high annealing temperature, high strength, environmental protection, energy saving and low melting point as the surface layer, is provided with the back surface which extends 10-30mm from the surface silicate colored glazing decorative glass in the back side part under the embodiment of a float process forming state of preparation process of a colored glazing flat glass which features high annealing temperature, high strength, environmental protection, energy saving and low melting point and preparation method of the present invention.
Fig. 8 is a structure schematic diagram of the novel composite board combined by adhering and combing aluminum plates which is provided with a float process forming state of preparation process of a colored glazing flat glass which features high annealing temperature, high strength, environmental protection, energy saving and low melting point as the surface layer, is provided with the back surface which extends 10-30mm from the surface silicate colored glazing decorative glass in the back side part under the embodiment of a float process forming state of preparation process of a colored glazing flat glass which features high annealing temperature, high strength, environmental protection, energy saving and low melting point and preparation method of the present invention, the holes can be formed in the preset position on the 10-30mm extending part and can be used for installing the bolt on the wall surface.

### Description of figure marks

1: The substrate glass of a colored glazing flat glass which features high annealing temperature, high strength, environmental protection, energy saving and low melting point
2: Inlet of feed bin
3: Feed bin
4: Present prepared mixing raw material
5: Raw materials entering the mouth of molten pool kiln of molten pool
6: Molten pool kiln
7: Diversion trough
8: Tin trough
9: Transitional roller
10: Annealing kiln
11: Cutting assembling
12: Float production line matrix
21: The oblique line part is the printed first color area colored glazing pattern area
31: The cross line part is the printed second color area colored glazing pattern area
41: The small black point part is the printed third color area colored glazing pattern area
123: The glaze pattern decorative layer on which three preset pattern color area colored glaze are printed
13: Acolored glazing flat glass which features high annealing temperature, high strength, environmental protection, energy saving and low melting point with the colored glazing layer
14: The panel of which the rear side part is not beyond a colored glazing flat glass which features high annealing temperature, high strength, environmental protection, energy saving and low melting point at the surface layer after being overlapped
141: The panel of which two sides extend 10-30mm from a colored glazing flat glass which features high annealing temperature, high strength, environmental protection, energy saving and low melting point after being overlapped 15: Preset adhesive
16: Bolt installing hole of which the rear aluminum plate of the composite board extends 10-30mm from the side part of a colored glazing flat glass which features high annealing temperature, high strength, environmental protection, energy saving and low melting point

### Embodiments

The present invention initiates a new functional colored glazing glass product which has (1) novel and innovative environmental type glass substrate technical solution, (2) linear thermal expansion characteristics, wherein the high-annealing point is the annealing temperature lower limit (the endothermic peak threshold temperature), and (3) high-strength glass and colored glazing layer with melting temperature limited to 540°C-730°C (note: the general glass mosaic and the glazes of all the glass is at the melting temperature above 760°C-820°C), and the technical problems in the prior art that the flat glass cannot be used for non-tempered large plate colored printing decorative glass can be solved.

In the prior art, only the present invention can initiate the production with low cost and high efficiency in order to raise the lower limit (endothermic peak threshold temperature) of the substrate glass annealing temperature from 490°C of the general flat glass to at least 540°C, preferentially 600°C or more than 650°C or more than 700°C (note: only the display alkali-free boron glass under the conventional flat glass has such performance, the industry insiders all know that the market price is RMB 250,000 to 300,000 per ton due to the factors such as the technology and the material, which is about RMB 2,000 per ton higher than the price of the building sodium glass), the temperature of the present invention is 150°C-220°C higher than the temperature of 490°C of the soda-lime glass in the prior art, the present invention has outstanding heat expansion linear characteristics, which means that the glass is deformed a little at the temperature area close to the annealing point, therefore, I, the glaze with melting point at 540°C-730°C can be adopted, the glaze with melting point of 600°C-650°C or 650°C-700°C is better, such glaze can be massively produced with high cost, the glaze with melting point at temperature below 540°C cannot be massively produced, and serious problem due to the environmental protection is generated, the present invention can be sintered with the printing fine pattern at temperature below the annealing point. The secondary annealing process is not carried out, and the stone and various pattern decorative boards of the fine colored glazing texture, the wood pattern printed colored or single-colored products of a colored glazing flat glass which features high annealing temperature, high strength, environmental protection, energy saving and low melting point of 2,400×1,200mm and 3,000×1,800mm can be produced for the first time, such as the panel, wooden laminated board, the aluminum plastic board, the wooden composite board, the wood powder density board and the resin board with standard dimension, and the product can be cut according to the construction requirement dimension just like the advanced standard board.

More details of the e of the present invention are shown below.

### The first embodiment:

According to an embodiment of the present invention, a colored glazing flat glass which features high annealing temperature, high strength, environmental protection, energy saving and low melting point, the melting point of the colored glazing layer with 1-10 color(s) on the surface of its substrate glass is 540-730°C, and the substrate glass of its product is characterized in that: the said substrate glass contains SiO₂, CaO, MgO, Al₂O₃, Fe₂O₃ and Na₂O; calculated as per weight percentage, the said substrate glass contains B₂O₃ 0-3.9%, Na₂O 0.01-14%, Fe₂O₃ 0.01-5%, F₂O 0-2.8%, MgO 8.1-22.2%, and Al₂O₃ 0.01-39%, wherein the content of SiO₂ is 1.9-4.1 times that of CaO, and the content of CaO 1.2 -1.6 times that of MgO; the thickness difference of the said substrate glass is less than 0.3mm; the water absorption of the said substrate glass goes between 0- 0.3%; the flexural strength of the said substrate glass is up to 50-180Mpa; the lower limit of annealing temperature (endothermic peak threshold temperature) of the said substrate glass goes between 550°C-710°C.

Calculated as per weight percentage, the content of Al₂O₃ in the substrate glass is less than or equal to 30%, when the viscosity is 10^{0.5}Pa·s, the temperature of the said substrate glass is 1,480°C-1,640°C; when the viscosity is 10¹ Pa·s, the temperature of the said substrate glass is 1,410°C-1,600°C; when the viscosity is 10² Pa·s, the temperature of the said substrate glass is 1,180°C-1,340°C; when the viscosity is 10³ Pa·s, the temperature of the said substrate glass is 1,040°C-1,220°C; the thickness difference of the said substrate glass is less than 0.3mm; the water absorption of the said substrate glass goes between 0- 0.3%; the strain point temperature of the said substrate glass goes between 560°C-720°C; the flexural strength of the said substrate glass is 50-180MPa; the difference of thermal expansion coefficient of the said substrate glass is 1.0-3.0ppm between 150°C-300°C; the difference of thermal expansion coefficient of the said substrate glass is 1.0-2.8ppm between 550°C-600°C.

In addition, Al₂O₃ is added to improve the strength of the substrate glass and improve the temperature of the glass and the temperature under various viscosities. The substrate glass in the embodiment can be added with proper Al₂O₃ according to the demand on strength and the requirement of temperature at various viscosities. (In addition, unless otherwise specified, the percentage composition of various compositions in the substrate glass is the weight percentage in the specification.)

### Performance characteristics of product

### Annealing temperature performance

Note: the lower limit of annealing temperature (endothermic peak threshold temperature) in the specification is detected by comprehensive thermal analyzer. The lower limit (t endothermic peak threshold temperature) of the substrate glass of the present invention is at 550°C-710°C. The lower limit of annealing temperature (endothermic peak threshold temperature) of the substrate glass in the embodiment of the present invention is preferentially 600°C or 650°C or between 650°C-700°C in order to solve the technical solutions that the cracks are often found occurs in secondary annealing at the colored glazing glass during sintering the glaze at temperature below the annealing point.

### Strength performance

The aforesaid (A) existing industrial and building glass such as flat glass and LCD glass contains about 1% or 1-3% Al₂O₃, and their technical solution is not advisably added with too much Al₂O₃, otherwise the production will not be carried out due to high viscosity, and the strength is only about 45-60MPa as well.

According to the embodiments for the substrate glass in the present invention, as stated in the part for viscosity, it can be known that when 20-25% or 25-30% Al₂O₃ is added, the viscosity is lower than that of the prior art, a platform with good scope for technical control is available, and the product of the present invention can be easily up to 100-160MPa or 130-180MPa in product strength. The flexural strength of the glass in the embodiment of the present specification and invention is cut into pieces with a dimension of 50mm×5mm×5mm and measured with flexural strength meter in accordance with GB/T3810.4-2006.

### THigh strain point, outstanding linear characteristics of expansion coefficient, and few expansion changes at different ranges of temperature

The expansion coefficient of the glass as set forth in the embodiment of the present invention is measured in accordance with GB/T7320.1-2000.

TNo more deformation or cracks are found when the product heated or cooled radically and especially when the colored glaze is sintered. However, the technical solution of the substrate glass as set forth in the embodiment of the present invention has better linear characteristics of expansion coefficient and produces few abrupt changes over glass viscoelasticity, the difference of thermal expansion coefficient of its product is 1.0-3.0ppm between 150°C-300°C; the difference of thermal expansion coefficient of the said glass is 1.0-3.0ppm between 150°C-300°C. The difference of thermal expansion coefficient of the said substrate glass is 1.0-2.8ppm between 550°C-600°C;the difference of alkali-free glass is 1-3.0ppm between 600°C-650°C. It is 5-16 times as much as 16ppm, a difference value of thermal expansion coefficient at 550°C-600°C compared with soda-lime float glass, PDP glass or TFT glass as well as 7-20 times as much as 20ppm, a difference value of thermal expansion coefficient at 550°C-600°C for LCD soda-lime glass.

The application in colored glazing pattern sintering process under sudden heating or sudden cooling and building decorative material fireproofing service environment is also provided, and high advantages that the deformation is less than that of various kinds of glass, the stability is ensured, no sudden variation occurs, cracks are often found, and the viscoelasticity of the glass under sudden heating and sudden cooling states is little suddenly changed are provided and greater than those of the conventional various kinds of glass.

### Water absorption

T he water absorption of the substrate glass in the embodiment of the present invention goes between 0-0.3%. In addition, the substrate glass of a colored glazing flat glass which features high annealing temperature, high strength, environmental protection, energy saving and low melting point in the embodiment of the present invention can be selectively provided with high transparent characteristic and water resistance.

The water absorption of the said substrate glass as set forth in the embodiment of the present invention is measured in accordance with GB/T3810.3-2006.

### The thickness difference

The thickness difference of the said substrate glass as set forth in the glass embodiment of the present invention is less than 0.3mm.

The thickness difference of the said substrate glass as set forth in the glass embodiment of the present invention is measured in accordance with GB/T1216.

In order to detail the technical solution of the substrate glass in the embodiment of the present invention, the formula of the sample of the substrate glass below the colored glazing layer and corresponding performance of the sample in the embodiment of the present invention are listed in Table 1 below.

### Controllable economy, standardization and convenience of construction design

The substrate glass of the present invention has the cost dozens of the cost of the current alkali-free and boron-free flat glass, the colored glazing glass cannot be subjected to secondary annealing under the lower limit of annealing temperature (endothermic peak threshold temperature), and the production efficiency is dozens higher (only expensive platinum channels for removing the foam can be adopted in the non-alkali condition in the boron-containing condition, a production line with daily output of 8 tons needs the investment of more than RMB one billion, and cold repair is needed to be carried out for three months each year because of the corrosion of the boron composition to the melting tank, thus RMB250,000 to 300,000 per ton are reached, in addition, the technical solution of the present invention also can reach the same various qualities, in particular the quality strength is 1-2 times higher, and high-ton technology method for producing 300 to 800 tons each day is carried out, only RMB 300-400 million is invested, so that the cost is reduced 50 to 80 times.), thus the production can be carried out with high quality, reasonability, economy and low cost. It is clear that the performance of the flat glass, the lower limit of annealing temperature (endothermic peak threshold temperature), the strength and the low cost can be solved, which brings the technical solution with unexpected effect in the prior art, respect to the one of the technical problems of the inorganic glaze printed flat glass in the market. The industry insiders know that the advantages of wide new application are brought (the tempered glaze panel is not applicable, cannot be cut at the site just like the ceramic tile, if the pattern is to be printed, the width pattern defect of about 1-2mm is generated at the side edge of the tempered board, the toughed board cannot be edged like the ceramic tile, the present invention can be printed into large 2,400×1,200mm standard board, and can be edged and cut like the ceramic tile, the non-defect of the pattern can be ensured, the standardization of the large board of the product is ensured, and the convenience is provided for use and cutting).

**Substrate Glass Samples and Characteristics under Colored Glazing Layer (Table 1)**

| Sample No. | Sample 1 | Sample 2 | Sample 3 | Sample 4 | Sample 5 | Sample 6 | Sample 7 | Sample 8 | Sample 9 | Sample 10 | Sample 11 |
|---|---|---|---|---|---|---|---|---|---|---|---|
| SiO₂: CaO | About 1.9 | About 2.0 | About 4.1 | About 4.1 | About 2.5 | About 2.1 | About 2.3 | About 2.5 | About 2.9 | About 3.3 | About 3.6 |
| CaO: MgO | About 1.2 | About 1.6 | About 1.2 | About 1.6 | About 1.4 | About 1.4 | About 14.5 | About 1.4 | About 1.4 | About 1.3 | About 1.2 |
| MgO content (wt %) | 20.7 | 15.8 | 11.2 | 10.5 | 11.1 | 13.3 | 11.7 | 11.8 | 12 | 11.1 | 11.5 |
| CaO content (wt %) | 25.2 | 24.5 | 13.8 | 16.5 | 15.2 | 18.5 | 17 | 16.5 | 16.8 | 14.4 | 14 |
| SiO₂ content (wt %) | 48.4 | 50 | 56.1 | 67 | 38.2 | 39.2 | 39.3 | 41.2 | 48.7 | 47.6 | 50 |
| Total content of SiO₂, CaO and MgO (wt %) | 94.3 | 90.3 | 81.1 | 94 | 64.5 | 71 | 68 | 69.5 | 77.5 | 73.1 | 75.5 |
| Fe₂O₃ content (wt %) | 0.1 | 0.15 | 0.2 | 0.2 | 0.3 | 0.1 | 0.2 | 0.1 | 0.1 | 1.3 | 1.2 |
| Al₂O₃ (wt %) | 3.6 | 4 | 12.7 | 3.1 | 25 | 20 | 30 | 28 | 20 | 23 | 16 |
| Na₂O content (wt %) | 1 | 5 | 5 | 1.9 | 2 | 2 | 0.5 | 1 | 1 | 1 | 5 |
| BaO content (wt %) | 0.8 | / | 0.8 | / | 5.7 | 4.9 | 0.5 | 0.4 | 0.4 | 1 | 1.3 |
| B2O3 content (wt %) | / | / | / | / | / | / | 0.5 | / | / | / | / |
| TiO₂ content (wt %) | 0.2 | 0.55 | 0.2 | 0.8 | 2.5 | 2 | 0.3 | 1 | 1 | 0.6 | 1 |
| lower limit of annealing temperature (endothermic peak threshold temperature) (°C) | Above 600 | Above 590 | Above 590 | Above 590 | Above 630 | Above 630 | Above 650 | Above 650 | Above 630 | Above 630 | Above 590 |
| Flexural strength (MPa) | About 60-80 | About 60-80 | About 80-100 | About 70-80 | About 145-155 | About 130-150 | About 160-180 | About 150-170 | About 135-150 | About 140-160 | About 90-110 |
| Melting point of glaze on the surface layer of substrate glass | 600°C-730°C | | | | | | | | | | |

**Substrate Glass Samples and Characteristics under Colored Glazing Layer (Table 1 <Continued>)**

| Sample No. | Sample | Sample | Sample | Sample 4 | Sample 5 | Sample 6 | Sample 7 | Sample 8 | Sample 9 | Sample | Sample |
|---|---|---|---|---|---|---|---|---|---|---|---|
| Thickness difference | < | < | < | < 0,3mm | < 0,3mm | < 0,3mm | < 0,3mm | < 0,3mm | < 0,3mm | < 0,3mm | < 0,3mm |
| Water absorption | 0-0,3% | 0-0,3% | 0-0,3% | 0-0,3% | 0-0,3% | 0-0,3% | 0-0,3% | 0-0,3% | 0-0,3% | 0-0,3% | 0-0,3% |
| Melting process temperature (°C) at 10^{0,5} | About 1580 | About 1600 | About 1580 | About 1590 | About 1600 | About 1560 | About 1640* | About 1620* | About 1560 | About 1580 | About 1550 |
| Melting process temperature (°C) at | About 1490 | About 1510 | About 1500 | About 1510 | About 1530 | About 1530 | About 1570 | About 1560 | About 1490 | About 1510 | About 1480 |
| Clarification bubble discharge process | About 1285 | About 1280 | About 1290 | About 1290 | About 1320 | About 1300 | About 1350 | About 1340 | About 1300 | About 1305 | About 1295 |
| Forming process temperature (°C) at 10³ | About 1130 | About 1120 | About 1145 | About 1130 | About 1180 | About 1160 | About 1200 | About 1220 | About 1160 | About 1170 | About 1140 |
| Difference value of expansion coefficient at | About 1,6-2,8 | About 1,2-2,5 | About 1,6-2,7 | About 1,6-2,6 | About 1,4-2,7 | About 1,7-2,8 | About 1,6-2,4 | About 1,4-2,8 | About 1,2-2,5 | About 1,4-2,6 | About 1,6-2,7 |
| Difference value of expansion coefficient at | About 1,4-2,5 | About 1,3-2,6 | About 1,8-2,8 | About 1,6-2,5 | About 1,7-2,6 | About 1,8-2,3 | About 1,9-2,2 | About 1,4-2,4 | About 1,5-2,1 | About 1,8-2,3 | About 1,8-2,8 |
| Difference value of expansion coefficient at | / | / | / | / | / | / | About 1,5-2,4 | About 1,7-2,6 | About 1,6-2,8 | / | / |

| | | | | | | | | | | | |
|---|---|---|---|---|---|---|---|---|---|---|---|
| *It cannot be measured by high-temperature rotary viscosimeter, and it is obtained by calculation. | | | | | | | | | | | |

**Table 2 (Prior Art)**

| Sample No. | Sample I soda-lime glass (It is a float line product in North China. The difference of all float soda-lime glass compositions is only between 1-2 %.) | Sample II PDP glass (Glass and Enamel 4th Issue, Volume 33, August 2005 and other literatures) | Sample III LCD boron glass CN101784494A, US2002/0011080A1 and other literatures and embodiments | Technical solution in "crystallized glass having natural-marble-like surface patterns and method of producing the same" with a publication number CN1053047A. |
|---|---|---|---|---|
| MgO (wt %) | About 5 | About 0-4 | 0.5 | 0.5-17 |
| CaO (wt %) | About 6 | About 3-5.5 | About 4.5 | 1-20 |
| SiO₂ (wt %) | About 74 | About 54-60 | About 59 | 45-75 |
| Al₂O₃ (wt %) | About 1 | About 6-11 | About 15 | 1-25 |
| Na₂O (wt %) | About 13 | About 0-6 | / | 1-15 |
| B₂O₃ (wt %) | / | / | About 10.5 | 0-10 |
| BaO (wt %) | / | About 9 | About 6 | 0.1-18 |
| K₂O (wt %) | About 1 | About 10 | / | / |
| Fe₂O₃ (wt %) | About 0.1 | 0 | 0 | 0 |
| TiO₂ (wt %) | 0 | 0 | 0 | 0 |
| Melting process temperature (°C) at 10^{0.5} Pa•s | It cannot be measured by high-temperature rotary viscosimeter. | It cannot be measured by high-temperature rotary viscosimeter. | It cannot be measured by high-temperature rotary viscosimeter. | Due to a lot of crystals, it cannot be measured by high-temperature rotary viscosimeter. |
| Melting process temperature (°C) at 10¹ Pa•s | It cannot be measured by high-temperature rotary viscosimeter. | It cannot be measured by high-temperature rotary viscosimeter. | It cannot be measured by high-temperature rotary viscosimeter. | Due to a lot of crystals, it cannot be measured by high-temperature rotary viscosimeter. |
| Clarification, bubble discharge process temperature (°C) at 10² Pa•s | About 1,380-1400 | About 1,600-1650* | It cannot be measured by high-temperature rotary viscosimeter. | Due to a lot of crystals, it cannot be measured by high-temperature rotary viscosimeter. |
| Forming process temperature (°C) at 10³ Pa•s | About 1,210-1,250 | About 1,500-1,560 | About 1,480-1,580 | Due to a lot of crystals, it cannot be measured by high-temperature rotary viscosimeter. |
| Forming process temperature (°C) at 10^{3.7} Pa•s | About 1,065-1,100 | About 1,380-1,420 | About 1,350-1,400 | Due to a lot of crystals, it cannot be measured by high-temperature rotary viscosimeter. |
| Flexural strength (MPa) | About 45 | About 55 | About 50 | It is lower than 50. Due to a lot of crystals, its strength is poor. |
| Difference value of expansion coefficient of glass at 550°C-600°C (about PPM) | About 20 | About 15 | / | Due to a lot of crystals, it cannot be measured. |
| Difference value of expansion coefficient of glass at 600°C-650°C (about PPM) | / | / | About 10 | Due to a lot of crystals, it cannot be measured. |
| Lower limit of annealing temperature (endothermic peak threshold temperature) (°C) | About 490 | About 580 | About 600-650 | / |
| Thickness difference | <0.3mm | <0.3mm | <0.3mm | Up to 1.5mm-2mm |
| Water absorption | Within 0.3% | Within 0.3% | Within 0.3% | It is more than 0.5% due to a lot of bubbles among crystal granules. |

| | | | | |
|---|---|---|---|---|
| *It cannot be measured by high-temperature rotary viscosimeter, and it is obtained by calculation. | | | | |

Seen from Table 1:
In the samples of the prior art of the present invention as stated in the embodiment, the content of B₂O₃ is 0-3.9%, the content of Fe₂O₃ is 0.01-5%, the content of TiO₂ is 0.0003-4.9%, the content of Na₂O is 0.02-8.8% and the content of MgO is 8.1-22.2%; SiO₂ is 1.9-4.1 times that of CaO; CaO is 1.2-1.6 times that of MgO; first, the viscosity is better than the melting viscosity in the prior art at 10^{0.5} Pa•s and 10¹ Pa•s; when the viscosity is 10² Pa•s, bubble discharge, clarification and homogenized viscosity are better than the prior art for 150°C-400°C (see and compare Table 2 and Table 3). Moreover, its coefficient of linear thermal expansion goes between the differences among 150°C-300°C, 550°C-600°C and 600°C-650°C; it is better than soda-lime glass, PDP glass and high-boron glass for alkali-free LCD.

In the preferential samples 6, 7, 8, 9 and, the content of CaO is 1.3-1.5 times that of MgO, the content of SiO₂ is 2.1-3.3 times that of CaO, and the content of Al₂O₃ is in a preferential scope of 19-30%, particularly, the technical effect indications such as the differences of viscosity and coefficient of linear expansion as well as temperature indicators are the best.

Samples 1, 2, 3, 4, 5 and 11 are included in the technical solutions of the present invention, it can be seen that its viscosity, strength and expansion coefficient are better than TFT LCD boron glass made with the prior art, PDP plasma display glass and the flat glass made with the prior art.

Samples 1, 2, 3 and 4 are the embodiments in the technical solution of the present invention, falling into the scope of upper limit, lower limit, crossing upper and lower limits of the proportions of magnesium, calcium and silicon, samples 1 and 5 are the embodiments the upper and lower limits in which the total content of silicon, calcium and magnesium is 59.5-99.8%.

Seen from the samples 10 and 11, the iron content ranges from 1 to 1.3, higher content of BaO and TiO lead to nontransparent isabelline or claybank, in order to reduce the cost considering the light transmission of the glass, and expanding the original application scope of the general quartz which is unusable to the transparent glass and is of times higher during producing the glass product on each surface of the glaze layer (such as the colored glazing brick of the ceramic and the archaized brick), thus the technical effect of saving the resource and the effect (the price of the high-level silicon material is ten times the price of the general silicon material) of decreasing about 10 times the cost of the main raw materials can be adapted are obvious.

Table 2 lists some existing glass formulas and relevant performances; seen from Table 2, the contents of boron, ferrum and sodium of the four samples are different from the present invention, and the ratios between silicon and calcium, CaO and MgO are totally different from the present invention, the proportions between SiO₂ and CaO, CaO and MgO are much higher than the present invention,in the present invention, the content of CaO is 1.2-1.6 times that of MgO and the content of SiO₂ is 1.9-4.1 times that of CaO; the contents between SiO₂ and CaO as well as CaO and MgO in these products are totally different; seen from Table 2, silicon is always considered technically as the glass skeleton and the matrix that is melted or difficult to be melted; therefore, its viscosity and melting process temperature at 10^{0.5} Pa•s and 10¹ Pa•s cannot be measured by the standard rotary viscosimeter (because the viscosity is too high), it can be seen that it is relatively or very difficult to overcome the energy consumption, slag points and stones and improve the production efficiency, the temperature during normal bubble discharge and homogenization and at 10² Pa•s is 150°C-300°C higher than that of the samples in Table 1 for the present invention, it can be seen that bubble discharge and homogenization are difficult, the process of the present invention features energy saving and easy control, as for the forming process temperature at 10³ Pa•s, the present invention has a comparative advantage of easy technical control in terms of forming, product evenness and thickness, in product strength, the product in the present invention is 2-3 times as much as it, in coefficient of linear expansion, it has great advantages when thin film transistor is sintered on the glass, or when it comes to the difference changes at several important temperature areas for linear characteristics of fire and explosion protection and viscoelasticity values.

### Example 1

Based on the above first embodiment, calculated as per weight percentage, it is limited that the content of Al₂O₃ is 0.01-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-710°C; when the viscosity is 10^{0.5} Pa·s, the temperature of the said substrate glass is 1,500°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,070°C-1,230°C; the flexural strength of the said substrate glass is 50-180Mpa.

### Example 2

Based on the above first embodiment, calculated as per weight percentage, it is limited that the content of Al₂O₃ is 0.01-19%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,520°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,070°C-1,230°C; the flexural strength of the said substrate glass is 75-180Mpa.

### Example 3

Based on the above first embodiment, calculated as per weight percentage, it is limited that the content of Al₂O₃ is 19-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,550°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,080°C-1,230°C; the flexural strength of the said flat glass is 130-180Mpa.

### Example 4

Based on the above first embodiment, calculated as per weight percentage, it is limited that the content of Al₂O₃ is 0.01-19%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,500°C-1,580°C; when the viscosity is 10¹ Pa·s, the temperature of the said substrate glass is 1,450°C-1,520°C; when the viscosity is 10² Pa·s, the temperature of the said substrate glass is 1,210°C-1,310°C; when the viscosity is 10³ Pa·s, the temperature of the said substrate glass is 1,070°C-1,160°C; the flexural strength of the said flat glass is 50-145Mpa.

### Example 5

Based on the above first embodiment, for the composition of the substrate glass, it is limited that calculated as per weight percentage, it is limited that the content of TiO₂ is 0.0003-4.9%.

### Example 6

Based on the above first embodiment, for the composition of the substrate glass, it is limited that calculated as per weight percentage, it is limited that the content of BaO is 0.01-14%.

### Example 6

Based on the above first embodiment, for the composition of the substrate glass, it is limited that calculated as per weight percentage, the total content of SiO₂, CaO and MgO in it is 51%-99.8%,

### Example 7

Based on the above first embodiment, for the composition of the substrate glass, it is limited that calculated as per weight percentage, the content of CaO is 1.3-1.6 times that of MgO, the content of SiO₂ is 2.0-3.6 time(s) that of CaO, the content of MgO is 10.1-19.9% and the content of Al₂O₃ is 19-39%.

### Example 8

Based on the above first embodiment, for the composition of the substrate glass, it is limited that:
(1) Calculated as per weight percentage, in its substrate glass contents: ① MgO is 7-20%, ② the content of CaO is 1.0-1.8 time(s) that of MgO,③ SiO₂ is 2.6-5.6 times that of MgO, ④SiO₂ is 2.2-3.8 times that of CaO, ⑤Al₂O₃ is 0.1-30%, ⑥ Na₂O is 0-18%, ⑦BaO is 0-5%; calculated as per weight percentage, the total content of MgO, CaO and SiO₂ in the substrate glass of its product is 51%-100%; it has the following performances:
(2) The strain point temperature of the substrate glass of its product goes between 560°C-720°C;
(3) The water absorption of the substrate glass of its product goes between 0-0.001%;

### Example 9

Based on the above first embodiment, for the composition of the substrate glass, it is limited that calculated as per weight percentage, the content of Al₂O₃ in its substrate glass is less than or equal to 30%, when the viscosity is 10^{0.5}Pa·s, the temperature of the said substrate glass is 1,480°C-1,640°C; when the viscosity is 10¹ Pa·s, the temperature of the said substrate glass is 1,410°C-1,600°C; when the viscosity is 10² Pa·s, the temperature of the said substrate glass is 1,180°C-1,340°C; when the viscosity is 10³ Pa·s, the temperature of the said substrate glass is 1,040°C-1,220°C; the thickness difference of the said substrate glass is less than 0.3mm; the water absorption of the said substrate glass goes between 0- 0.3%; the strain point temperature of the said substrate glass goes between 560°C-720°C; the flexural strength of the said substrate glass is 50-180MPa; the difference of thermal expansion coefficient of the said substrate glass is 1.0-3.0ppm between 150°C-300°C; the difference of thermal expansion coefficient of the said substrate glass is 1.0-2.8ppm between 550°C-600°C.

### Example 10

Based on the above first embodiment, the glaze layer of the surface layer of the said substrate glass is added with 20-70% quartz crystal or Al₂O₃ crystal.

### Example 11

According to a colored glazing flat glass which features high annealing temperature, high strength, environmental protection, energy saving and low melting point in the first embodiment of the present invention, the thickness of the substrate glass of its product is 0.3-1.8mm.

### Example 12

According to a colored glazing flat glass which features high annealing temperature, high strength, environmental protection, energy saving and low melting point in the first embodiment of the present invention, the thickness of the substrate glass of its product is 1.8-20mm.

### Example 13

Based on the above first embodiment, for the composition of the substrate glass, it is limited that calculated as per weight percentage, the content of Na₂O is 0.01-2%.

### Example 14

Based on the above first embodiment, for the composition of the substrate glass, it is limited that calculated as per weight percentage, the content of Na₂O is 2.1-5%.

### Example 15

Based on the above first embodiment, for the composition of the substrate glass, it is limited that calculated as per weight percentage, the content of Na₂O is 2.1-8%.

### Example 16

Based on the above first embodiment, for the composition of the substrate glass, it is limited that calculated as per weight percentage, the content of Na₂O is 2.1-14%.

### Example 17

Based on the above first embodiment, for the composition of the substrate glass, it is limited that calculated as per weight percentage, the content of Al₂O₃ is 1-19%

The above are the compositions and their characteristics of the substrate glass of a colored glazing flat glass which features high annealing temperature, high strength, environmental protection, energy saving and low melting point in the embodiment of the present invention, and the following describes the manufacturing methods for a colored glazing flat glass which features high annealing temperature, high strength, environmental protection, energy saving and low melting point in the embodiment of the present invention.

### The second embodiment

As shown in Fig. 1, it is a plan diagram of the substrate glass product of a colored glazing flat glass which features high annealing temperature, high strength, environmental protection, energy saving and low melting point under a colored glazing flat glass which features high annealing temperature, high strength, environmental protection, energy saving and low melting point and preparation method of the embodiment of the present invention.

As shown in Fig. 2, it is a flow diagram of a float process forming of preparation process of a colored glazing flat glass which features high annealing temperature, high strength, environmental protection, energy saving and low melting point and the substrate glass of a colored glazing flat glass which features high annealing temperature, high strength, environmental protection, energy saving and low melting point in the embodiments of the preparation method. It can be seen from the figure that its forming process flow is to put the preset prepared raw materials into the feed bin, convey the raw materials in feed bin to the molten pool kiln, melt them in molten at preset temperature and discharge the bubbles; and then the liquid molten mass enters the tin trough (gas protecting station for nitrogen and hydrogen nearby by the tin trough is set to supply the protecting gas to the tin trough), it is smoothened, drawn and pulled on the tin surface of tin trough to form polishing and flat semi-finished product belts; the glass products are obtained after the transitional roller enters the annealing kiln for temperature reduction and cooling; the finished products can be obtained after being cut and sub-packed as per the preset sizes on the cutting and sub-packing platform, then the semi-finished product of the substrate glass of a colored glazing flat glass which features high annealing temperature, high strength, environmental protection, energy saving and low melting point.

As shown in Fig. 3, it is a a side section diagram of a float process forming state of preparation process of a colored glazing flat glass which features high annealing temperature, high strength, environmental protection, energy saving and low melting point and the substrate glass of a colored glazing flat glass which features high annealing temperature, high strength, environmental protection, energy saving and low melting point in the preparation method. It can be seen from the figure that mark 2 of the figure is inlet of feed bin, mark 3 of the figure is feed bin, mark 4 of the figure is preset prepared mixing raw material, mark 5 of the figure is raw materials entering molten pool kiln of molten pool (the preset prepared mixing raw materials as shown in mark 4 of the figure are conveyed to the molten pool of the molten pool kiln), mark 12 of the figure is float production line matrix, mark 6 of the figure is molten pool, mark 7 of the figure means that the liquid melting raw materials enter diversion trough of tin trough, mark 8 of the figure is tin trough under float process, mark 9 of the figure is semi-finished product belts formed in the tin trough enter the transitional roller of annealing kiln, mark 10 of the figure is annealing kiln and mark 11 of the figure is the cutting sub-packing platform that cuts and packs the formed products.

As shown in Fig. 4, it is a plan diagram of the substrate glass product of a colored glazing flat glass which features high annealing temperature, high strength, environmental protection, energy saving and low melting point which has the dimension of 1,220mm×2,440mm, is formed by the printed and three-color area preset colored glazing in the surface layer and has a the preset colored glazing pattern decorative layer under a colored glazing flat glass which features high annealing temperature, high strength, environmental protection, energy saving and low melting point and preparation method of the embodiment of the present invention. As shown in the figure, the mark 1 is the substrate glass of a colored glazing flat glass which features high annealing temperature, high strength, environmental protection, energy saving and low melting point, the inclined line of the mark 12 is the printed first color area colored glazing pattern area, the cross line part of the mark 31 is the printed second color area colored glazing pattern area, and the small black point in the mark 41 is the printed third color area colored glazing pattern area.

As shown in Fig. 5, it is a plan diagram of the substrate glass product of a colored glazing flat glass which features high annealing temperature, high strength, environmental protection, energy saving and low melting point which has the dimension of 1,220mm×2,440mm and thickness of about 2-5mm, is formed by the printed and three-color area preset colored glazing in the surface layer and has a the preset colored glazing pattern decorative layer being 0.1-1mm in thickness under a colored glazing flat glass which features high annealing temperature, high strength, environmental protection, energy saving and low melting point and preparation method of the embodiment of the present invention. As shown in the figure, mark 1 is the substrate glass of a colored glazing flat glass which features high annealing temperature, high strength, environmental protection, energy saving and low melting point, and marks 123 is the glaze pattern decorative layers on which the preset three pattern color area colored glazing is printed.
As shown in Fig. 6, it is a structure schematic diagram of the section of the novel composite boarded combined by adhering and combing aluminum plates which is provided with a colored glazing flat glass which features high annealing temperature, high strength, environmental protection, energy saving and low melting point as the surface layer, is overlapped in rear surface and is not beyond the dimension of the surface silicate colored glazing decorative glass in the rear side part under the embodiment of a colored glazing flat glass which features high annealing temperature, high strength, environmental protection, energy saving and low melting point and preparation method of the present invention. As shown in the figure, the mark 13 is a colored glazing flat glass which features high annealing temperature, high strength, environmental protection, energy saving and low melting point with the colored glazing layer, mark 14 is the aluminum plate which is overlapped with the rear side being not beyond the side part of a colored glazing flat glass which features high annealing temperature, high strength, environmental protection, energy saving and low melting point at the surface layer, and mark 15 is the preset adhesive.

As shown in Fig. 7, it is the structure schematic diagram of the section of the novel composite boarded combined by adhering and combing aluminum plates which is provided with a colored glazing flat glass which features high annealing temperature, high strength, environmental protection, energy saving and low melting point as the surface layer, is provided with the rear surface which extends 10-30mm from the surface silicate colored glazing decorative glass in the rear side part under the embodiment of a colored glazing flat glass which features high annealing temperature, high strength, environmental protection, energy saving and low melting point and preparation method of the present invention. As shown in the figure, the mark 13 is a colored glazing flat glass which features high annealing temperature, high strength, environmental protection, energy saving and low melting point with the colored glazing layer, the mark 141 is the panel of which two sides extend 10-30mm from a colored glazing flat glass which features high annealing temperature, high strength, environmental protection, energy saving and low melting point after being overlapped, and the mark 15 is the preset adhesive.

As shown in Fig. 8, it is the structure schematic diagram of the novel composite board combined by adhering and combing aluminum plates which is provided with a colored glazing flat glass which features high annealing temperature, high strength, environmental protection, energy saving and low melting point as the surface layer, is provided with the rear surface which extends 10-30mm from the surface silicate colored glazing decorative glass in the rear side part under the embodiment of a colored glazing flat glass which features high annealing temperature, high strength, environmental protection, energy saving and low melting point and preparation method of the present invention, the holes can be formed in the preset position on the 10-30mm extending part and can be used for installing the bolt on the wall surface. As shown in the figure, mark 13 is a colored glazing flat glass which features high annealing temperature, high strength, environmental protection, energy saving and low melting point with the colored glazing layer, mark 14 is the panel of which two sides extend 10-30mm from a colored glazing flat glass which features high annealing temperature, high strength, environmental protection, energy saving and low melting point after being overlapped, and mark 16 is the bolt installing hole in the side part of the rear bottom aluminum plate of the composite board, extending 10-30mm from a colored glazing flat glass which features high annealing temperature, high strength, environmental protection, energy saving and low melting point.

A colored glazing flat glass which features high annealing temperature, high strength, environmental protection, energy saving and low melting point and the preparation method are adopted and used for preparing the glass product and printing the colored glazing decorative layer in order to form the product in a float formation way, furthermore, the manufacture process comprises the following steps:
[1]. First, the raw materials are prepared, and the mixing ratios of the raw materials are calculated according to the range of various compositions of the glass in the first embodiment.
[2]. The float production line adopting the float process as shown in figure is prepared, including the raw material bin, the molten pool kiln, the tin-liquid-containing thin kiln, the side drawing machine, the dragger, the transition roller table, the annealing kiln cooling system and the cutting packing platform.
[3]. The preset prepared mixed material prepared in step [1] as shown in mark 4 is conveyed into the raw material bin as shown in mark 3 through the feed port as shown in mark 3 in Fig. 3 by means of a raw material conveyor belt, according to the production process of the float process as shown in Fig. 3 and 2, then the mixed materials prepared in step[1]are conveyed into the preset high-temperature resistant molten pool of the molten pool kiln through the molten pool kiln port as shown in mark 5, then the liquid molten body with high flowability can be gradually generated corresponding to the temperature area of the melting temperature of each glass formula (the melting temperature can be 1,360°C-1,460°C or 1,460°C-1,680°C at the condition that the content of Al₂O₃ is less than 30%), the bubble in the liquid raw material is gradually removed through the high temperature area, thus forming the mixed raw material molten body which can flow into the formation process and has relatively high flowability.
[4]. The mixed raw material molten body with relatively high flowability in step[3]flows from the molten pool kiln as shown in the mark 6 into the tin surface of the tin groove (also known as tin kiln) as shown in the mark 8 in the float production line through the clamp port of the flow guide groove as shown in the mark 7, according to the production process of the float process as shown in Fig. 2 and Fig. 3, then the molten body flows to reach level, and is subjected to side drawing through the side drawing machine and the traction of the traction machine, the molten body is polished and leveled on the molten tin surface, in order to form the semi-finished product belt which is discharged from the thin kiln through the transition thin platform as shown in the mark 9, the semi-finished product flows into the annealing kiln of the cooling system of the roller channel as shown in the mark 10 in order to be cooled, then flows into the cutting packing platform as shown in the mark 11, and is cut and packaged, thus obtaining the colored glazing layer with 1 to 10 colors on the surface of the substrate glass of the present invention as shown in Fig. 1, wherein the colored glazing layer ahs the melting point at 540°C-730°C.The said glass contains SiO₂, CaO, MgO, Al₂O₃, Fe₂O₃, TiO₂ and Na₂O; calculated as per weight percentage, the said flat glass contains B₂O₃ 0-3.9%, Na₂O 0.01-14%, Fe₂O₃ 0.01-5%, F₂O 0-2.8%, TiO₂ 0.0003-4.9%, MgO 8.1-22.2%, and Al₂O₃ 0.01-39%, wherein the content of SiO₂ is 1.9-4.1 times that of CaO, and the content of CaO is 1.2-1.6 times that of MgO; the thickness difference of the said flat glass is less than 0.3mm; the water absorption of the said flat glass goes between 0- 0.3%; the flexural strength of the said flat glass is up to 50-180Mpa. when the viscosity is 10^{0.5}Pa·s, the temperature of the said substrate glass is 1,480°C-1,640°C; when the viscosity is 10¹ Pa·s, the temperature of the said substrate glass is 1,410°C-1,600°C; when the viscosity is 10² Pa·s, the temperature of the said substrate glass is 1,180°C-1,340°C; when the viscosity is 10³ Pa·s, the temperature of the said substrate glass is 1,040°C-1,220°C; the thickness difference of the said substrate glass is less than 0.3mm; the water absorption of the said substrate glass goes between 0- 0.3%; the lower limit of annealing temperature (endothermic peak threshold temperature) of the said substrate glass goes between 550°C-710°C; the flexural strength of the said substrate glass is 50-180MPa; the difference of thermal expansion coefficient of the said substrate glass is 1.0-3.0ppm between 150°C-300°C; the difference of thermal expansion coefficient of the said substrate glass is 1.0-2.8ppm between 550°C-600°C, and it is the substrate glass of a colored glazing flat glass which features high annealing temperature, high strength, environmental protection, energy saving and low melting point.
[5]. The substrate glass of a colored glazing flat glass which features high annealing temperature, high strength, environmental protection, energy saving and low melting point without glaze pattern on the surface layer as shown in mark 1 is sequentially conveyed into the printing position in the conveying line, the colored glazing printing equipment for presetting the first color area printing pattern board, the second color area printing pattern board and the third color area printing pattern board are sequentially adopted as the requirement of the preset pattern, and are used for respectively printing the white glaze to the surface layer of the substrate glass of a colored glazing flat glass which features high annealing temperature, high strength, environmental protection, energy saving and low melting point as shown in mark 1 through the printing pattern area as shown in the inclined line of the mark 21 in the first color area printing pattern board; the deep orange glaze is printed onto the surface layer of the substrate glass of a colored glazing flat glass which features high annealing temperature, high strength, environmental protection, energy saving and low melting point as shown in mark 1 through the printing pattern area as shown in the cross line part of the mark 31 of the second color area printing pattern board; the light orange glaze is printed onto the surface layer of the substrate glass of a colored glazing flat glass which features high annealing temperature, high strength, environmental protection, energy saving and low melting point as shown in mark 1 through the printing pattern area as showed in the small black point part of the mark 41 of the third color area printing pattern board; therefore, the printing of the preset white area colored glazing, the deep orange area colored glazing and the light orange area colored glazing is accomplished, and the glaze layer is controlled to be printed into thickness of about 0.1-1mm in the operation process.
[6]. The substrate glass of a colored glazing flat glass which features high annealing temperature, high strength, environmental protection, energy saving and low melting point, formed by the three-color area colored glazing of preset white, deep orange and light orange are conveyed into the roller channel kiln in the glaze sintering process through the conveying line, under the technical condition at temperature less than the deformation softening point temperature of a colored glazing flat glass which features high annealing temperature, high strength, environmental protection, energy saving and low melting point as kwon in the industry, the silicate glaze is gradually processed by preheating, heating and sintering and cooling, so as to obtain a colored glazing flat glass which features high annealing temperature, high strength, environmental protection, energy saving and low melting point product of which the pattern composed of the white glaze color area, deep orange glaze color area and the light orange glaze color area as shown in figure is formed on the surface, the dimension is 1,220mm×2,440mm, the thickness is 2-5mm, and the thermal strain temperature is the lower limit of the annealing temperature goes between 550°C-600°C or 600°C-650°C and the tensile strength reaches 50-160MPa, can be gained in different temperature areas as different technologies requirement. As shown in Fig. 4, mark 1 is the substrate glass of a colored glazing flat glass which features high annealing temperature, high strength, environmental protection, energy saving and low melting point without glaze pattern on the surface layer, the inclination line of the mark 21 is the printed first color area colored glazing pattern area, the cross line of the mark 2 is the printed second color area colored glazing pattern area, and the small black points in the mark 41 represent the printed third color area colored glazing pattern area. For the section and as shown in Fig. 5, the mark 1 is the substrate glass of a colored glazing flat glass which features high annealing temperature, high strength, environmental protection, energy saving and low melting point without glaze pattern on the surface, wherein the substrate glass is about 2-5mm in thickness, and marks 123 represent the glaze pattern decorative layers with colored glazing being thick in about 0.1-1mm, and the upper surface of the glaze pattern decorative layer is printed with the preset white color area, the deep orange color area and the light orange color area which form the pattern.

### Modification 1 of the second embodiment

The preparation method of the substrate glass of a colored glazing flat glass which features high annealing temperature, high strength, environmental protection, energy saving and low melting point in the second embodiment can be carried out according to the following technologies, such as:
Alternatively, option 1 can be selected,the horizontal drawing processcan be adopted: the substrate glass of a colored glazing flat glass which features high annealing temperature, high strength, environmental protection, energy saving and low melting point can be manufactured with the flowing melting mass formed by horizontal drawing process through thinning, forming, annealing, cooling, cutting, applying the colored glazing and sintering;
Alternatively, option 2 can be selected, and Glaverbel process can be adopted: the substrate glass of a colored glazing flat glass which features high annealing temperature, high strength, environmental protection, energy saving and low melting point can be manufactured with the flowing melting mass formed by Glaverbel process through forming, annealing, cooling, cutting, applying the colored glazing and sintering;
Alternatively, option 3 can be selected, and calendaring process can be adopted: the substrate glass of a colored glazing flat glass which features high annealing temperature, high strength, environmental protection, energy saving and low melting point can be manufactured with the flowing melting mass formed by calendaring process through calendaring, forming, annealing, cooling, cutting, applying the colored glazing and sintering;
Alternatively, option 4 can be selected, and overflow process can be adopted: the substrate glass of a colored glazing flat glass which features high annealing temperature, high strength, environmental protection, energy saving and low melting point can be manufactured with the flowing melting mass formed by overflow process through down-leading, forming, annealing, cooling, cutting, applying the colored glazing and sintering;
The substrate glass of a colored glazing flat glass which features high annealing temperature, high strength, environmental protection, energy saving and low melting point can be manufactured through any of the above processes, the melting point of the colored glazing layer with 2-10 colors on the surface of its substrate glass is 540-730°C, the said substrate glass contains SiO₂, CaO, MgO, Al₂O₃, Fe₂O₃, TiO₂ and Na₂O; calculated as per weight percentage, the said flat glass contains B₂O₃ 0-3.9%, Na₂O 0.01-14%, Fe₂O₃ 0.01-5%, F₂O 0-2.8%, TiO₂ 0.0003-4.9%, MgO 8.1-22.2%, and Al₂O₃ 0.01-39%, wherein the content of SiO₂ is 1.9-4.1 times that of CaO, and the content of CaO is 1.2-1.6 times that of MgO; the thickness difference of the said flat glass is less than 0.3mm; the water absorption of the said flat glass goes between 0- 0.3%; the flexural strength of the said flat glass is up to 50-180Mpa. when the viscosity is 10^{0.5}Pa·s, the temperature of the said substrate glass is 1,480°C-1,640°C; when the viscosity is 10¹ Pa·s, the temperature of the said substrate glass is 1,410°C-1,600°C; when the viscosity is 10² Pa·s, the temperature of the said substrate glass is 1,180°C-1,340°C; when the viscosity is 10³ Pa·s, the temperature of the said substrate glass is 1,040°C-1,220°C; the thickness difference of the said substrate glass is less than 0.3mm; the water absorption of the said substrate glass goes between 0-0.3%; the lower limit of annealing temperature (endothermic peak threshold temperature) of the said substrate glass goes between 550°C-710°C; the flexural strength of the said substrate glass is 50-180MPa; the difference of thermal expansion coefficient of the said substrate glass is 1.0-3.0ppm between 150°C-300°C; the difference of thermal expansion coefficient of the said substrate glass is 1.0-2.8ppm between 550°C-600°C, and it is the substrate glass of a colored glazing flat glass which features high annealing temperature, high strength, environmental protection, energy saving and low melting point.

### Modification 2 of second embedment

The colored glazing pattern decorative layer on the surface of the product is provided with 2-100 sets, each set comprises a single product printing device unit composed of 1-10 plant mesh printing or roller printing devices or ink jetting printing devices which are arranged in parallel, the surface of the substrate glass of a colored glazing flat glass which features high annealing temperature, high strength, environmental protection, energy saving and low melting point is printed with the colored glazing, then the glaze is sintered, the prepared products in the same batch enable the surface of 2-100 products to prepare a colored glazing flat glass which features high annealing temperature, high strength, environmental protection, energy saving and low melting point product with 1-10 color(s) and being preset with different printing patterns or colored glazing decorative layers.

### Modification 3 of the second embodiment

The glaze of the surface decorative layer of the product contains corundum crystal, or quartz crystal, or gehlenite crystal, or nepheline crystal, or merwinite crystal, or calcium akermanite crystal, or mullite crystal, or diopside crystal, or wollastonite crystal, or willemite crystal, or cordierite crystal, or monticellite crystal, or enstatite crystal, or lithium-containing crystal, or spinel crystal or rutile crystal.

### Modification 4 of the second embodiment

The composite board of its product consists of colored glazing flat glass which features high annealing temperature, high strength, environmental protection, energy saving and low melting point (1)binding material layer (2) and sheet metal (3) with the thickness of 0.1-1mm or 1-5mm.

### Modification 5 of the second embodiment

2 to 4 sides of the metal plat at the rear bottom surface of the composite board of the product extends 10-30mm from the side part of a colored glazing flat glass which features high annealing temperature, high strength, environmental protection, energy saving and low melting point product after being overlapped.

### Application of the present invention and characteristics different from the prior art:

A colored glazing flat glass which features high annealing temperature, high strength, environmental protection, energy saving and low melting point in the embodiment of the present invention is basically different from the prior art, as shown below:
The present invention has novel technical solutions in the field of a flat and colored glass: the melting point of the colored glazing layer with 1-10 color(s) on the surface of its substrate glass is 540-730°C, and the substrate glass of its product is characterized in that: the said substrate glass contains SiO₂, CaO, MgO, Al₂O₃, Fe₂O₃ and Na₂O; calculated as per weight percentage, the said substrate glass contains B₂O₃ 0-3.9%, Na₂O 0.01-14%, Fe₂O₃ 0.01-5%, F₂O 0-2.8%, MgO 8.1-22.2%, and Al₂O₃ 0.01-39%, wherein the content of SiO₂ is 1.9-4.1 times that of CaO, and the content of CaO 1.2 -1.6 times that of MgO; the thickness difference of the said substrate glass is less than 0.3mm; the water absorption of the said substrate glass goes between 0-0.3%; the flexural strength of the said substrate glass is up to 50-180Mpa; the lower limit of annealing temperature (endothermic peak threshold temperature) of the said substrate glass goes between 550°C-710°C.

The present invention has a lower limit of annealing temperature (endothermic peak threshold temperature) which is different from the existing soda-lime flat glass, must have the temperature of 550°C-710°C, and can preferentially select the lower limit of annealing temperature (endothermic peak threshold temperature) such as 600°C,650°Cor 700°C, the present invention is firstly a combined invention; for a colored glazing flat glass, first of all, the melting temperature of the colored glazing layer with 1-10 color(s) selects 540°C-730°C,and the flat glass that matches with it has the following new properties and characteristics which are different from the flat glass in prior art.

First, for all flat glass related to colored glazing layer in the prior art, the important point is that it is an invention for selection such compositions as aluminum, silicon, calcium, magnesium, ferrum and sodium as well as the compositions among silicon, calcium and magnesium, it is an invention about the changes of ratios among these technical elements; in the selection of changes over the ratios among the elements of the present invention, its technical solution is as follows: silicon is 2.0-4.1 times that of calcium, and calcium 1.2-1.6 times that of magnesium, all the flat glass in the prior art at least has two end values for the ratio between the two elements mentioned above, beyond the scope of the present invention, that is the selection of the ratios of the above elements of the present invention is in close limit of the prior art, featuring novelty; in the application of flat glass with colored glazing layers, the following new product properties have been found, and the following unexpected technical effects are generated.

Second, the present invention has disclosed an invention type for the new application of the product transferred from its new properties; it also generates the unexpected effect in the present invention (that is, though the processing methods of all kinds of flat glass and in the new applications of flat glass, it can generate the new properties of the flat glass: [1]excellent and new viscosity temperature and products at different process stages, [2]thickness difference, [3]water absorption,[4]flexural strength, [5]visible light transmittance, [6]waviness,[7]new properties and new applications of flat glass such as coefficient of linear thermal expansion).

In the new applications, the present invention has found the new viscosity temperature and the properties for eutectic composition at melting, homogenization, bubble discharge and clarification process stages, especially the control for waviness evenness, thickness difference and viscosity temperature in stretching process (or the polishing in the float process) at forming process stage, which are never disclosed in the products in the prior art.
(A) One of the discoveries of new product properties: it has overcome the element omission of Na₂O of flat soda glass caused by the conventional technical prejudice: almost 99.9% of building glass and industrial glass in the prior art contains about 13% sodium which is mainly used for fluxing, especially the fluxing for silicon to control the viscosity at each process stage,however, the technical solutions and new product properties found in the present invention have broken through this technical prejudice, it can be invented according to the change relations among silicon, calcium and magnesium, in the application of flat glass, the new product properties is 150°C-250°C lower than the viscosity temperature at several process stages for high-sodium flat glass in the prior art when the sodium content is 0-1%, this will produce the thickness difference and waviness that can save energy and control the high-quality product; it can overcome such defects as stones and slag points caused by poor melting process as well as bubble ratio caused by poor bubble discharge, especially for the ultrathin flat glass with LCD of 0.5-1.1mm, it can reduce the slag points, stone ratio, bubble ratio, the ratio of nonconforming thickness difference and the ratio of nonconforming waviness.
   In the operation of the prior art and in case of any defects at each process stage, the temperature will be increased for each process stage in operation so as to remove such defects, however, the top of molten pool will be easily collapsed, which greatly shortens its service life; the present invention provides an adjustable scope for the viscosity which is technically controllable in the control process, which has fundamentally solved the technical difficulties that the insiders think that the existing sodium (high-sodium) flat glass is suffering "short-nature material" (namely "short-nature glass).
(B) One of the discoveries of new product properties: it has overcome the conventional technical prejudice; it produces an invention of omitting a technical element related to "B₂O₃" of an alkali-free boron glass: the existing alkali-free boron flat glass especially used for LCD cannot contain more than 1% sodium, therefore, 8-15% boron is used as a fluxing agent; a technical prejudice exists among some believing in this way; in particular, its fluxing for silicon can achieve the reduction of viscosity temperature of the high-quality flat glass at each process stage; moreover, it can generate lower limit of annealing temperature (endothermic peak threshold temperature) of the substrate glass, and 600°C-730°C technical effect can be achieved. However, the technical solution and the new properties found in the present invention have broken through such technical prejudice, due to the change over the ratio of silicon, calcium and magnesium and in the application of flat glass, it can make the lower limit of annealing temperature (endothermic peak threshold temperature) of the substrate glass, and 600°C-730°C achieve 600°C-730°C, and can be 250°C-350°C lower than the viscosity temperature of the product with 8-15% boron in the prior art at several process stages of the flat glass when there is no B₂O₃, this will form a new technical platform for controlling product quality by control process in a bigger scope, compared with the glass in prior art, it has high quality requirements such as high-level thickness difference, waviness standard, almost no bubbles, slag points or stones, the finished product rate and excellent product rate related to ultrathin products with 0.5-2mm thickness, for viscosity at bubble discharge, clarification and homogenization process stages and forming and stretching process stages, it has provided a process control scope and a process control platform which is much better than the prior art.
   The proportional relation of silicon element, calcium element and magnesium element in the present invention vary, the technical preconception that the lower limit of annealing temperature (endothermic peak threshold temperature) just can be raised by adding the aluminum or boron compositions in the prior art. The technical solution in the present invention enables the lower limit of annealing temperature (endothermic peak threshold temperature) to be able to be raised by about 100°C with the boron and aluminum less than 1%, and the lower limit of annealing temperature (endothermic peak threshold temperature) at sodium content less than 2% can be greatly raised (see samples in attached sheet). If Al₂O₃ content is increased in the technical solution, the technical effect that the lower limit of annealing temperature (endothermic peak threshold temperature) is further raised can be gained. Therefore, the core performance requirements of low cost and high annealing point of the present invention can be met.
(C)
   (1). The nature that the lower limit of annealing temperature (endothermic peak threshold temperature) of the substrate glass reaches 610°C-710°C and is preferable 650°C-680°C is generated due to the omitting of one element under the 13% sodium content in the soda-lime glass accounting for more than 99% of the total amount of the conventional flat glass, however, the lower limit of annealing temperature (endothermic peak threshold temperature) of the conventional all soda-lime glass is only 490°C. In addition, the lower limit of annealing temperature (endothermic peak threshold temperature) of the non-alkali (or only 0.01-1% sodium) non-boron flat glass is 610°C-710°C, the magnesium is 8.1 % (up to 12-18% in general) to the minimum, the calcium is 9.6% (up to 15-18% in general) to the minimum according to the technical solution of the present invention, such composition is the main cause that the lower limit of annealing temperature (endothermic peak threshold temperature) of the substrate glass is greatly raised, and is 120°C-200°C higher than the lower limit of annealing temperature (endothermic peak threshold temperature) of the general common flat soda-lime glass, which is another new nature of the product that plays an important role in the technical effect of the colored glazing glass, the lower limit of annealing temperature (endothermic peak threshold temperature) of the conventional soda-lime glass is only 490°C, the inorganic colored glazing in sintering can select the mosaic glass, the mosaic glass can be in form of small block with dimension of 2-5cm, and the low-temperature glaze (with melting point of about) with lower cost is adopted, which is small in area, low in requirement of the secondary annealing, therefore, the cracking can be avoided.
   (2). If the second option is provided, the dimension is 10cm, 20cm or 60cm×60cm or higher, the second annealing is difficultly carried out, the breaking rate is relatively high, the mass production of the product never occurs in the prior art and the market. The large dimension is along with the organic resin printing technology which brings the problems that the resin is certainly discolored outdoor and cannot be combined with the glass well, the resin cannot be adhered like the ceramic tile, the ceramic tile glue can corrode the colored resin, and also cannot be firmly adhered. The flat glass in the prior art can be the light and thin glass colored glazing flat product to replace the high-energy-consumption thick and heavy ceramic tile product.
   (3). The third option is that the current glaze with melting point of about 490°C (note: the ceramic tile glaze has the melting point of about 950°C-1,200°C), if the glaze is used for preparing small lines of the patterning products on the general cup and bottle, little area is occupied, the mass usage cannot be carried out, the large-scale and high-output economy of the decorative material are not realized, so no samples for application are provided.
   (4). The fourth option is that the conventional non-alkali-boron flat glass is adopted, which means that the glass of the liquid crystal display is relatively high in production cost in the prior art, ahs the market price of about RMB 300,000 per ton, if the glass is 0.7mm in thickness, the price is up to RMB 600 per square centimeter, the PDP plasma glass being thick in 1.8-2.8mm also reaches RMB 1,000 per square centimeter, though the lower limit of annealing temperature (endothermic peak threshold temperature) can reach 580°C-680°C or 700°C, the economic glaze with melting point of 600°C-650°C can be adopted, however, the glass cannot be used as the substrate of the decorative material to replace the ceramic tile because of the cost, and even the economic feasibility of the top-end ceramic tile cannot be realized. The new lower limit of annealing temperature (endothermic peak threshold temperature) of the non-boron non-alkali in the present invention can reach 600°C-730°C, and the production mode with low economic cost, high quality of product and high output as mentioned above can be realized, and the glass substrate of the present invention can be provided, and furthermore, the colored glazing at 600°C-730°C with economic feasibility can be adopted for realizing combination product. The technology with unexpected technical effect solves the problem of the replacement of the ceramic tile, and the problems of the conventional decorative materials, which exist for a long time and are expected to be solved, also can be solved.
   (5). It should be noted here that the lower limit of annealing temperature (endothermic peak threshold temperature) of the glass can be radically increased without boron by adding the contents of calcium and magnesium to be 19-50% (normally only containing 10-12% calcium and magnesium) which is higher than the soda-lime glass in the prior art, and the content of Na₂O is also increased radically to be 2-13% which is only slightly lower than the lower limit of annealing temperature (endothermic peak threshold temperature) of the product without sodium or low sodium; however, it does not mean that the purpose of production can be achieved by adding more calcium and magnesium, because it must have the process conditions that are suitable for flat glass, especially lower viscosity temperature of bubble discharge; if the flat glass in the prior art is added with more calcium and magnesium contents rather than the ratio of silicon, calcium and magnesium in the present invention; even though the content of calcium and magnesium is added in the prior art, its viscosity temperature is still 150°C-300°C higher than the present invention; for example, the alkali-free boron flat glass is added with 8-15% boron as a fluxing agent and only 8-10% Al₂O₃ at 10² Pa•s, the temperature for bubble discharge is more than 1,500, an expensive platinum bubble discharge channel of shallow molten pool (the depth of liquid glass: only 5-10cm) must be used to complete the procedures for bubble discharge; moreover, the daily output is only several tons, therefore, its output is several hundred times less than the technical solutions of the present invention that the viscosity is low, the lower limit of annealing temperature (endothermic peak threshold temperature) is high, and it can produce several hundred tons per day (the depth of molten pool in bubble discharge area: 70-100cm), what's more, its investment is several times than the present invention, that is to say, to overcome the increase of lower limit of annealing temperature (endothermic peak threshold temperature) to make it meet the requirements of all LCD flat glass, glazed, fireproof and explosion-proof flat glass, the flat glass in the prior art adopts the technical solution by adding 20-50% calcium and magnesium rather than adopting the technical solution of the present invention related to changes over the ratio of all elements and the selection of the present invention, it is not the unexpected combined technical effects which can make the cost and the lower limit of annealing temperature (endothermic peak threshold temperature) compatible each other.
   (6). Its unexpected technical effects do not lie in the lower limit of annealing temperature (endothermic peak threshold temperature) of the product of the present invention containing no sodium and boron or containing low aluminum as well as the coefficient of linear expansion at 150°C-300°C,610°C-650°C or 680°C; it can fully produce high-quality, low cost and dozens of times of production efficiency, meet the technical requirements of producing high-quality flat and colored glazing glass and form better economic cost goal.
(D) One of the discoveries of new product properties: it has overcome a technical prejudice that the viscosity temperature of the conventional flat glass will be naturally increased radically by adding Al₂O₃, for example, the existing soda-lime glass can only be added with about 1% Al₂O₃ while the existing alkali-free boron flat glass can also be added with about 8% Al₂O₃ to improve strain points, if it is added too much, it will make the viscosity temperature which have been very high at each process stage much higher and fail to achieve the quality goal by controlling the process, some believe that the product strength can be improved by adding 25-30% Al₂O₃ when the controllable process cannot reduce the cost; however, the technical solutions and the new product properties of the flat glass found in the present invention have broken through such a technical prejudice; when the present invention does not contain boron, sodium and fluorine (0-1%), and the content of Al₂O₃ is about 3.1%, 16%, 20% or 25% which is a great change, the prior art holds that the viscosity will be increased radically, but the change of the viscosity temperature in the present invention only goes between 30°C to 40°C; when the content of Al₂O₃ is about 30%, the viscosity temperature only increases about 80°C (See 11 samples of Table 1).
   Moreover, the viscosity temperature is 100°C-200°C lower than the flat glass whose Na₂O is 13% or B₂O₃ is 8-15%; this proves that the technical solutions for the change over the ratio of silicon, calcium and magnesium in the technical solutions of the present invention can produce a new product property when the content of Al₂O₃ is 25% or 30%; this is a new property for eutectic composition consisting of aluminum, silicon, magnesium and calcium and containing a high content of Al₂O₃; it can produce the unexpected effects in high aluminum content but low viscosity temperature, and then an unexpected technical effect in high-quality and high strength can be produced.
   In the present invention, the content of Al₂O₃ can be up to 19-28%, and the strength can be up to 140-160Mpa or 180Mps, which is 2-3 times as high as the prior art; the viscosity temperature is only 150°C-250°Clower than that with the prior art when the content of Al₂O₃ is only 1-25%; therefore, if the viscosity of alkali-free high-boron glass is formed by the technical solution of the present invention, then there will be much room for melting viscosity and strength when the content of Al₂O₃ is raised to be 29-39%. (Note: the flexural strength of the glass in the embodiment of the present specification and invention is cut into pieces with a dimension of 50mm×50mm×5mm and measured in accordance with GB/T3810, 4-2006) B₂O₃ in the alkali-free high-boron glass made with the prior art volatilizes, which will result in uneven compositions, damage the net structure related to Al₂O₃ and thus greatly impact the due strength; this is the important reason why the strength of the alkali-free high-boron glass is relatively poor even though it contains 7-15% Al₂O₃
   Therefore, when there are high aluminum content and no boron content, the present invention can produce a flexural strength with 90-145MPa or 145-180MPa; it also features energy saving, lower cost and large process scope for viscosity temperature, which is not achieved in the existing colored glazing glass; it can control melting at viscosity temperature stage of melting process, overcome the stones, prevent the slag points that are not melted and control the thickness difference and waviness of the flat glass during clarification and forming control (as the viscosity is lower, the flat glass product at this process stage will be softer and have a controllable scope; in contrast, the viscosity is higher, the flat glass product at this process stage will be harder, and then the thickness difference and waviness will not be easily controlled at such process stages as pulling, horizontal drawing, calendaring, leveling in float process, stretching and polishing etc) .
   The product has the nature higher than that of the product in the prior art, the strength is up to 2 times higher than the conventional flat glass, with the development and generation of the new nature of the product, the wall product with sufficient strength and being 1-2mm in thickness and the ground product being 2-3mm in thickness can be provided in combination with the colored glazing layer, the external wall hanging plate product being 12mm in thickness and various other ground products being 10mm in thickness of the current ceramics under the national standards can be replaced with high strength and light and thin performance, thus the unexpected effects that the energy, resource, logistics and warehouse are saved several times can be gained.
(E) Since an invention with a technical element omitted is adopted, it omitted boron to ensure better property for flat process at melting, bubble discharge, forming and stretching stages and generate the property of flexural strength by adding more A1203 under the premises that it can better control the quality than the prior art in stones, slag points, bubble rate, smoothness and thickness difference of alkali-free boron glass in the prior art; moreover, the product quality with high-quality bubble rate, smoothness, thickness difference and waviness can be guaranteed without unexpectedly adding 8-15% boron to flat display;, therefore, the technical preconception that the alkali-free boron glass production device in the prior art only can adopt the technology in combination of overflow process and platinum channel, the float process is better, and as a result, the production efficiency can be increased dozens of times, the investment can be saved dozens of times, and unexpected effect that the land plant building can be saved 20 times on the premise that the thickness difference, the flatness and the waviness are ensured. Therefore, the cost is greatly reduced, the combination of the colored glazing flat glass realizes that the lower limit of annealing temperature (endothermic peak threshold temperature) is adopted to massive production of the colored glass color the same as the alkali-free and boron-free display glass in the prior art, and the substrate glass for the colored glazing with new nature can be produced, the cost is reduced, and the unexpected effect in production of the unexpected economic feasible technological base can be gained.
   Third, since the revealing and discovery of the above new product properties have overcome many of the above prior art prejudices, it produces several unexpected effects as below in terms of colored glazing glass used for building and decoration industries: (1) technical effects in melting quality, bubble quality, smoothness, thickness difference and waviness quality related to the improvement and control process due to the property of viscosity temperature; (2) unexpected energy saving effect with over 200°C due to the reduction of viscosity temperature; (3) unexpected technical effect in producing 2-3 times increase of strength due to massive addition of aluminum to the property of eutectoid (from 1%-25% or 25-30%); (4) unexpected technical effect in producing 2-3 times thinner flat glass which is 2-3 times energy, resource and warehousing saving due to the increase of strength; (5) the new technical effect of the present invention lies in that it can save the increasingly reduced UD glass raw material resources due to the addition of Fe₂O₃ to the non-transparent or low transparent flat glass; the cost of main raw material of glass is reduced by 10 times; the conventional technology holds that the raw material with relatively high ferrum content makes the glass produce the blue-green defects, but the present invention can make the flat glass increase its strength by 2-3 times; therefore, it can be thinned by 2-3 times; light transmittance will be increased while the blue-green level is not significant; it does not affect the use of glass. When the colored glazing plane is upward, the raw materials with high-content ferrum can be used in large quantity, transparency is not taken into consideration at all, it can save the raw material and resources at medium level in the glass, and it can save the cost greatly. Therefore, this combined discovery can produce a colored glazing glass product with comprehensive effect in generating unexpectedly light, thin, high-strength, saving hi-end glass resource and raw material cost. This is a technical effect that other prior art fail to achieve in generation of high strength, light weight, thinness, raw material resource saving, and saving the raw material cost by 10 times; (6) since an invention with a technical element omitted is adopted, it omitted boron to ensure better property for flat process at melting, bubble discharge, forming and stretching stages and generate the property of flexural strength by adding more Al₂O₃ under the premises that it can better control the quality than the prior art in stones, slag points, bubble rate, smoothness and thickness difference of alkali-free boron glass in the prior art; moreover, the product quality with high-quality bubble rate, smoothness, thickness difference and waviness can be guaranteed without unexpectedly adding 8-15% boron to flat display; it can solve the technical prejudice that alkali-free boron glass device can only adopt overflow process and platinum channel process with a daily output of only 6-8 tons in the prior art; it can even adopt the float process, horizontal drawing process and calendaring process etc. with a daily output of 400-800 tons; under the premise that thickness, smoothness and waviness are guaranteed, it can produce an unexpected effect in improving the production efficiency by dozens of times, saving investment by dozens of times and saving the land and plant by 20 times; compared with the prior art for flat glass, the technical solutions of the present invention has the new, unrevealed and undisclosed properties which are not predicted, forecasted and reasoned in advance; it can overcome the conventionally technical prejudice in flat glass technology and solve the above major issues concerned by people in industry; the technical effect generates the changes over "quality" and "quantity"; it proves that the technical solutions are not obvious but outstanding, having the technical progress and innovativeness.
(F) The product can be sintered with the colored glazing layer at temperature below 700°C, so the printing glaze layer can be sintered, lots various crystals such as the crystal of 30-80% can be added to the glaze, specifically the low-cost quartz or corundum powder or particle, in order to generate the 0.2-3mm unique high hardness of the wearable surface layer (the quartz can reach hardness at level , and the corundum can reach the hardness at level 9), which cannot be reached in the ceramic production, the sintering temperature of the ceramic is 1,100°C-1,200°C, the quartz or the corundum on the surface layer of the ceramic just can be prepared into glass phase, the quartz or corundum crystal can be kept in crystallizing phase at temperature below 730°C, therefore, the unique wearable surface layer with the quartz crystal hardness reaching 7 level or the corundum crystal hardness reaching 9 level under decorative glass polishing can be generated, which is a revolutionary challenge to the wear resistance, zero water absorption, zero sewage absorption rate, and high skid resistance (the product can be used as the ground in the public place with large traffic, such as toilet, kitchen, subway and wharf because of the skid resistance), the quartz surface layer with hardness of level 7 can be polished, in order to obtain the optimal quartz glazing combined polished wearable product, furthermore, the corundum with hardness of level 9 cannot be polished, the unexpected effect is that the corundum can be prepared into the optimal durable skid-proof or wearable corundum glazing combined product, therefore, the present invention brings the energy-saving, environmental, low-cost, high-quality and wearable substitute updating technology, and the substitute challenge is provided for the high-energy consumption, high pollution, high dust emission, high water consumption, low output and low-quality product and the whole equipment technical equipment in the ceramic industry.
(G) The present invention can be prepared into a colored glazing flat glass product features which ultra thinness, high annealing temperature, high strength, environmental protection, energy saving and low melting point, wherein the product has theultra-thin thickness of 0.5-5mm, has breaking strength which reaches 50-180MPa, is preferable 90-145MPa or 145-180MPa, under the state the no tempered surface stress treatment is carried out, and the glass product is combined with thin metal plate to generate new composite board, in order to realize the purpose of light, thin and high decorative effect, as well as meeting the functional usage requirement.
   2-4 sides of the bottom metal plate of the composite board can extend 10-30mm from the side part of a colored glazing flat glass which features high annealing temperature, high strength, environmental protection, energy saving and low melting point after being overlapped, the holes are formed in the extending side part in order to directly drill the bolt into the wall body or the wall body framework in order to realize the innovative simple installation mode applied to the wall surface, therefore, the breaking and damaging rate is greatly reduced, and unexpected technical effect of the new product nature is brought.
(H) According to a colored glazing flat glass which features high annealing temperature, high strength, environmental protection, energy saving and low melting point of the present invention, the substrate glass of the product is 0.3-1.8mm in thickness. The product is specifically thin, is specifically suitable for being applied to the wall, and is specifically characterized in energy saving, and the equipment output is high.
(I). According to a colored glazing flat glass which features high annealing temperature, high strength, environmental protection, energy saving and low melting point, the thickness of the substrate glass of the product is 1.8-20mm. The product has high strength, is suitable for being applied to ground, and is specifically suitable for being applied to the product for the external wall of the super-large board.
(J) According to a colored glazing flat glass which features high annealing temperature, high strength, environmental protection, energy saving and low melting point, when Al₂O₃ content in the composition of the substrate glass of the product is 19-39%, the product has the top strength, so the product is specifically suitable for being applied to the special product requiring high strength.
   The colored glazing glass in the technical solution of the present invention shows decorative effects of high-level stone imitation and wood imitation, and various new natures are found out on the premise that the cost is relatively low, therefore, unexpected technical effect can be generated, and the product specifically solves the major technical problem which exists for a long time and is expected to be solved:
   First, in view of the annually produced ceramic tiles and boards of more than a hundred billion m² in the world. The only 3 billion m² ceramic tile products are used in the wall surface market. The product has the thickness of 8-15mm, the indoor wall surface is 8-10mm, and the outdoor is 12-15mm. The printing pattern (single-color or 2-10 colors) product of the present invention can be prepared into the product of 0.5-1.5mm, and therefore, the ceramic tile wall surface product can be thinned and lightened 6-10 times.
   About 7 billion m² ceramic tile products are applied to the ground market each year. The product has thickness of 9-12mm. The colored glazing printing pattern (single color or 2-10 colors) product of the present invention has the strength three times than that of the ceramic, so that the same strength can be realized at 3-4mm. One surface of the transparent glass is placed on the back surface, and the effect of printing the colored glazing pattern at the back is equal to that of the conventional polishing brick (a layer of transparent glazes is added to the surface of the ceramic pattern, and then a glass glaze surface is generated by polishing). 1 billion m² brick products are produced in the whole world. A layer of colored glazing pattern is formed on the surface of the glass just like the archaized brick of the ceramic, and about 3 billion m² brick products are produced in the world each year. A layer of crystal-containing (such as quartz) colored glazing layer is formed on the surface of the glass by sintering at low temperature, and then is polished, thus gaining the effect the same as that of the polishing brick of the conventional brick (the quartz content crystal in the present invention is up to 50%-60%, and the durability, hardness and pollution preventing performance are greater than those of the ceramic polishing brick), about 3 billion m² products are produced in the world each year. Which means that the backward production technology which produces 6-10 billion m² ceramic products is changed by a colored glazing flat glass which features high annealing temperature, high strength, environmental protection, energy saving and low melting point of the present invention.
   [1]. The product mentioned above is thinned 6 times the wall surface ceramic tile, and thinned 3 times the ground brick. Therefore, the product strategy problems which exists in a long term in the ceramic industry and is expected to be solved can be solved, such as the lightning, raw materials resource saving, oil saving, electricity energy saving, and reduction of carbon discharge and dust omission. The 10 billion m² building decorative ceramics can be produced each year, and the raw materials 70%-80% can be saved in the production link, the energy 70%-80% can be saved, and the carbon 70%-80% can be reduced in emission based on the 10% growth each year. (As calculation shown, if the global technical equipment is changed according to the float process of the present invention, the energy consumption of the generating capacity of three Three Gorges power stations can be saved each year).
   [2]. The thin plate with large dimension such as 2,400×1,200mm or 3,000×1,800mm can be produced, and a plurality of panels for the wall surface and decoration or the aluminum plastic board with standard dimension can be replaced, therefore, the aluminum resource is saved, the resource of the present invention is tens of thousands of times the aluminum resource reserves, the cost is lower, the product is higher in corrosion resistance, is more flat and stiff, and the pattern decoration expressive capacity is improved, all the patterns such as stone texture and wood texture can be printed. In addition, the wall surface installation method of the present invention is greater than that of the ceramic plate, the stone plate, the aluminum plate and the aluminum plastic plate in convenience, and the cost is low.
   [3]. On the premise that the strength is ensured, the product which has the thickness of 1-2mm and can be designed with the wood textures, the stone texture and the color which cannot be prepared on the ceramics and glass, is applied to facing of the wood board of the outer wall of the wood structural house in Europe and America, Russia, East Asia and South Asia, in order to replace the non-bearing wall surface of the brick and cement and reach the effect of high level, fire resistance, small thickness, sunshine resistance, and rain and snow resistance, furthermore, the graceful, nice, light and waterproof effects of the wall surface on the wood structural building brings new use value.
      (II). For the decorative glass in the prior art, the current general soda-lime glass just can be selected and used as the colored glazing base plate, the annealing point of the soda-lime glass is of about 490°C, the glaze below 480°C cannot be massively produced (first, lots of leads with high toxicity must be introduced, second, the cost is relatively high), so the printing just can be carried out on the glass mosaic below 5cm in dimension (the glass mosaic is hardly cracked during annealing due to relatively small dimension), and no large dimension printed inorganic glaze glass plates are produced in the history. In addition, the toughening technology is adopted for melting the glaze at temperature above 750°C-830°C, the improvement technology is adopted to solve the problem due to annealing stress. However, the dimension of such product is specified, the product cannot be cut, so the requirement in decoration project cannot be met, the soda-lime glass is poor in strength, and cannot be used as the ground.
         According to the technology of the present invention, [1]the lower limit (endothermic peak) of the annealing temperature of the substrate glass is preferably raised to reach 600°C or 650°C or 730°C, which is 150°C-200°C higher than the soda-lime glass, the product has outstanding thermal expansion linear characteristics, which means that the product is expanded and changed a little in the temperature area close to the annealing point, therefore, I, the glaze with melting point at 540°C-730°C (the glaze is different from the glaze with melting point below 480°C, the glaze can be massively produced with low cost, and the problem due to environmental production not occurs), then the printed fine pattern can be inserted below the annealing point temperature. Therefore, the secondary annealing process cannot be carried out, the unique fine colored glazing stone textures and wood texture pattern products with the dimension of various standard boards such as the decorative board or the stone board or the glass board of 2,400×1,200mm and 3,000×1,800mm can be produced, and the product can be cut into the dimension as random according to the construction requirement, therefore, the characteristics of conveince, high efficiency and low cost in ordering based on standard dimension, producing, supplying, selling, logistic and the whole cutting construction are brought. [2] Compared with the soda lime flat glass and ceramic plate in the prior art, the brick of the present invention is about 2-3 times the height of about 50MPa, is preferable 90-145MPa or 145-180MPa. The product can be produced with thickness reduced 2-3 times, and has the same strength. The product is specially can be used for substituting the ceramic product, which cannot be realized by all the colored glazing mosaic or tempered colored glazing glass.
      (III). The product can be sintered with the glaze at 540°C-730°C, the printed glaze layer can be sintered, lots of quartz or corundum powder or particles such as powder or particles of 20-65% can be added to the glaze layer, thus the unique wearable layer with hardness (up to 7 level) of 0.2-3mm can be produced, which cannot be realized in the ceramic, the ceramic has the sintering temperature of 1,100°C-1,200°C, the quartz on the surface layer of the ceramic at such temperature just can generate glass phase, the quartz or corundum at 600°C, 650°C and 700°C can be kept in crystal, therefore, the unique polished quartz crystal surface for the decorative glass can be produced, or the wearable anti-skid layer with the corundum crystal formed on the non-polishing surface can be generated, and the technical advances in six parts including the,[1]wear resistance, [2]skid resistance, [3]nearly zero water absorption of the polished surface and relatively high pollution preventing performance, [4]high strength and ultra-thin performance, [5]ultra-light super-large plate surface product dimension characteristics and [6]wall or dry-hanging mode of the ceramic and stone are provided, as the industry insiders known, the dust in glass melting process is reduced dozens of times that in the ceramic manufacture tech, and the waste is reduced hundred times that in production. Therefore, the advance on efficiency, energy saving and environmental protection of the whole ceramic technical equipment can be realized. The present invention plays a revolutionary role in environmental protection and the advance of the high energy consumption, high pollution, high dust emission, high water consumption, low output and low quality ceramic equipment industrial system industry of the ceramic industry.

In conclusion, the three parts, in particular in the ceramic and decorative glass industrial product and technology, are the three major technical problems which exists for a long term and are expected to be solved, and the technical solution and technical method of the present invention are not he technical solutions which can be simply generated by general logic reasoning or simple experiment by the technician in the field or the obvious technical effect easily realized, therefore, it proves that the technical solutions are not obvious but outstanding, having the technical progress and innovativeness.

The decorative glass material in the prior art, in particularly applied to the home and project such as inner and outer walls, ground, table panel and kitchen panel, is compared with the decorative glass of the present invention in that:
1.For the decorative glass in the prior art, the current general soda-lime glass just can be selected and used as the colored glazing base plate, the annealing point of the soda-lime glass is of about 490°C, the glaze below 480°C cannot be massively produced (I, lots of leads with high toxicity must be introduced, II, the cost is relatively high), so the printing just can be carried out on the glass mosaic below 5cm in dimension (the glass mosaic is hardly cracked during annealing due to relatively small dimension), and no large dimension printed inorganic glaze glass plates are produced in the history. In addition, the toughening technology is adopted for melting the glaze at temperature above 750 to 830°C, the improvement technology is adopted to solve the problem due to annealing stress. However, the dimension of such product is specified, the product cannot be cut, so the requirements of random cutting for construction and mapping characteristics of the general standard boards in the decorative project cannot be met, the soda-lime glass has poor strength, and cannot be used as the ground, the damaged soda-lime glass has the defects that the edge is sharp after being damaged, and the safety cannot be ensured.
   For he technology in the present invention:
   [1]. The unique high-precision printing glaze pattern of 2,400×1,200mm and 3,000×1,800mm can be produced with high yield, low energy consumption, high value, high strength, lightweight and thin thickness (0.5-3mm in thickness) an standard dimension can be produced, including stone texture, wood texture, and various high-level blanket patterns (which cannot be realized by the current ceramic or decorative glass technologies).
   [2]. The product of the present invention can be sintered with the colored glazing layer at temperature above 650°C, so the printing glaze layer can be sintered, lots various crystals such as the crystal of 30-80% can be added to the glaze, specifically the low-cost quartz or corundum powder or particle, in order to generate the 0.2-3mm unique high hardness of the wearable surface layer (hardness of 7 level or 9 level can be realized), in particularly, the quartz or the corundum is very after being sintered at 540°C to 700°C, therefore, the unique ground applicable product integrating the zero water absorption, the super white, and the wear resistance with hardness reaching 7 to 9 level can be produced. However, the surface layer containing the quartz crystal can be polished to form the smooth wearable product, and the non-polished product with the corundum surface can be the best anti-skid and wearable and new functional decorative product. All the characteristics mentioned above cannot be realized in the prior arts of all the ceramic products, technologies and decorative glass products, so this invention is unique, the sintering temperature of the glass is 1,100°C-1,200°C, the quartz or the corundum on the ceramic surface layer just can be kept in glass phase, and is embrittled, poor in wearable, impossible in super white in the transparent surface; however, in the sintering temperature area of 540°C-730°C of the present invention, the quartz can be kept in crystallizing phase, therefore, the unique polished quartz crystal surface layer of the decorative glass can be generated, and the revolutionary challenge is brought to the ceramic or the stone or the decorative glass surface layer on wear resistance, zero water absorption, zero pollution absorption rate and high skid resistance (the product can be applied to the ground of the toilet, the kitchen, the subway, the wharf and all the public places with large traffic due to the skid resistance), and the energy-saving, environmental, low-cost, high-quality and wearable substitute updating technology can be provided. The present invention brings the energy-saving, environmental, low-cost, high-quality and wearable substitute updating technology, and the substitute challenge is provided for the high-energy consumption, high pollution, high dust emission, high water consumption, low output and low-quality product and the whole equipment technical equipment in the ceramic industry. All the ceramic and decorative glass technologies in the prior art never show or give more attention on the technical solution of the present invention mentioned above and the obvious substantial technical effects.
2. Compared with the surface printing or fabric crystal product in the present invention, the artificial stone products in the prior art are low in output and effect, and high in cost, only 200-300 m² products are produced in one production line each day, the 30,000 to 80,000 m² products can be produced each day under the combination of the float line technology and the secondary sintering process.
3. Compared with the current aluminum plastic board decorative material, the aluminum-added composite board in the present invention can overcome the shortcoming that the plastic board of the outer wall is expanded, shrunk and seriously deformed under sunshine, the pattern is printed by inorganic material, and therefore, the product cannot be used as the outer wall. The aluminum-added composite board of the present invention has fine pattern, never fades, has relatively high flatness, can be simply and conveniently installed just like the aluminum plastic, therefore, the cost is greatly, and the working efficiency is greatly improved. In addition, the convenience is provided, the framework cannot be hung, lots of installing materials and processes can be saved, and the product can be directly fixed onto the wall body through the expansion bolt, then the adhesive is filled into the side clearance, and as a result, the stone dry-hanging decoration effect can be gained. All the advanced ceramic and decorative glass technologies never show or give more attention on the technical solution of the present invention mentioned above and the obvious substantial technical effects.
4. Compared with the decorative pattern plastic panel in the prior art, the present invention, specifically the ultra-thin product of 0.3 to 1.6mm has high strength, high hardness, ultra-thin thickness, super light weight, high durability, good pattern effect, good flatness, corrosion resistance, water resistance, resistance to moisture and layering, flame resistance, safely and environmental protection while being applied to facing of the table surface, the toilet and kitchen panels, sliding door surface and furniture.

For all the current colored glazing substrate glass technology, the glaze nature of the present invention is never published or given more attention or disclosed as well as the integral technical solution in combination of the technical solutions of the substrate glass of the present invention. Specifically all the current colored glazing substrate glass technology never publishes or discloses the technical solution of the first embodiment of the present invention, for the convention of 'single comparison principle', in particular the technical solution related to the substrate glass and the characteristics of the lower limit of annealing temperature (endothermic peak threshold temperature) as well as the technical solution of the melting point of the glaze, so the product of the present invention can replace many building ceramic products, the manufacturing technology is completely different from the international and domestic modern ceramic production line technical equipment technology, in particular that the high-energy consumption, high pollution and high water consumption links in water ball milling process, spray process, ceramic press process and polishing process are not carried out; furthermore, the technology has the innovation and maturity, the strength of the product is 2-3 times that of the ceramic (the ceramic is 50MPa, and the product of the present invention can reach 130-160MPa)), therefore, the ultra-thin product being thick in 2-2.3mm can be produced, thus the product with thinnest thickness of 6mm produced by the current building ceramic board can be replaced (the ceramic tiles massively produced by the modern mature technology are the products being thick in 9-15mm). As a result, compared with the modern ceramic, the technology in the present invention has the following advantages: ① the energy (oil, electricity can coal) up to 60%-80% can be saved; ② the product is 2-5mm in thickness, and is 1mm thinner than the modem ceramic product being thick in 10mm under polishing and grinding in the conventional technology, thus 50-80% of raw materials are saved; ③ the water up to 80% can be saved; ④ the GDP carbon diode emission is reduced by 60-80%; and ⑤ the large wood frame of the large board can be adopted and used for packaging, so that more than 50% of package box can be saved by comparing with the conventional carton box and foam box for the ceramic.

The technical solution of the present invention is the novel technical solution which cannot be generated by simple logical reasoning or simple test, the technical effect is not the technical effect which can be easily realized. This point is the problem which is expected to be solved by thousands or enterprises and hundreds of thousands of technicians in the global building decorative glass industry, building decorative ceramic industry and the decorative plate industry in recent ten to twenty years. The technical solution of the present invention is characterized in that the colored glazing with melting point of 540°C-730°C is attached on the glass substrate; all preset and indispensable compositions in a special scope such as Na₂O, Fe₂O₃, Al₂O₃, SiO₂, CaO, MgO or TiO₂ and BaO and raw materials whose special ratios are preset among SiO₂, CaO and MgO are configured; the technical preconception of various conventional fluxing compositions and eutectoid compositions is overcome, the expected technical effects such as fluxing or eutectoid function, that the produced product has the strength raised by 1-3 time(s), environmentally protection, energy saving and emission reduction; the B₂O₃ boron which brings damage to the environment is not added, the present invention has the advantages on viscosity and strength, and also has the characteristics that the practical environmental protection is realized, lots of energy is saved, the emission of the carbon diode is reduced, various flat glass products are light and thin, specifically the service life of the equipment is prolonged 6-10 times, the cost is saved, and the output is increased 10-20 times by comparing with the alkali-free boron glass, the raw materials can be saved many times after the product is lighted 3 to 6 times, the logistics under inland and ocean shipping are realized, the energy is saved 3-6 times in storage, and the cost is reduced, and the technical effect the like, which bring an important role in solution for the industrial problem, the industrial field of the new decorative glass is developed for the global decorative building material, the technical development trend that the ceramic board brick product can be replaced, the major technical problem which exists for a long term and is expected to be solved can be solved, and many other problems which are indicated in the specifications, exist for a long term and are expected to be solved, are solved, the innovation on melting point of the colored glazing and the outstanding strain point of such substrate glass are provided as well as the linear expansion coefficient characteristics, low viscosity and high strength characteristics, therefore, various technical problems due to the unique new decorative buildings with related characteristics can be realized, such as the large dimension standard board, the large board, the ultra-thin board, the board which features super white, zero absorption rate, high hardness, relatively high wear resistance and high pollution prevention performance, the fine pattern printing board, the fine pattern printing wearable board and the ultra-thin high-strength glass composite board.

For the unexpected technical effect mentioned above, various current technical preconceptions, in particular the technical preconception that the annealing temperature at low-boron and low aluminum state (less than 1-2%) cannot be raised, are overcome, the updating technical nature of the lower limit of annealing temperature (endothermic peak threshold temperature) of the glass produced by the present invention under the element omitted in the boron, aluminum and sodium technical elements is provided, in addition, the proportional relation of the technical elements are changed, the transfer of the current colored glazing flat glass application is adopted, the natures of adhering strength, strength, thickness difference and new fluxing or eutectoid body in the technical stages of melting, bubble removing, clarifying, homogenizing, forming and thinning during producing the new product are brought, the nature that the strength can be raised 1 to 2 times by adding the content of Al₂O₃ is caused, such natures can exist together in the colored glazing product, in addition, the glaze layer with special melting temperature is added, thus an unexpected technical effect is realized during producing the product, and compared with all the colored glazing product in the prior art, the present invention brings various technical effects which cannot be speculated, predicated and reasoned under multi-layer invention and combination invention, and the variation of 'quality' and 'quantity' of the technical effect is brought, the technical solution of the present invention is not easily realized, has outstanding substantial characteristics and outstanding technical advance, therefore, it proves that the technical solutions are not obvious, having the outstanding substantive features, technical progress and innovativeness.

The above statement is only for explaining the preferential embodiments in the present invention, but it is not a limitation for the present invention; any technicians who are familiar with this technology may use the above revealed technical contents, amend or modify the equivalent embodiments with the same changes; a colored glazing flat glass which features high annealing temperature, high strength, environmental protection, energy saving and low melting point and its preparation method can be implemented according to different requirements and performances. It can be seen that it is still in the scope of technical solutions of the present invention if it is not separated from the content of technical solutions of the present invention, especially the content of claims no matter any simple amendment, equivalent changes and modifications are made for the above embodiments according to the technical essence of the present invention.

## Claims

1. A colored glazing flat glass which features high annealing temperature, high strength, environmental protection, energy saving and low melting point, the melting point of the colored glazing layer with 1-10 color(s) on the surface of its substrate glass is 540-730°C, and the substrate glass of its product is **characterized in that**: the said substrate glass contains SiO₂, CaO, MgO, Al₂O₃, Fe₂O₃ and Na₂O, calculated as per weight percentage, the said substrate glass contains B₂O₃ 0-3.9%, Na₂O 0.01-14%, Fe₂O₃ 0.01-5%, F₂O 0-2.8%, MgO 8.1-22.2%, and Al₂O₃ 0.01-39%, wherein the content of SiO₂ is 1.9 -4.1 times that of CaO, and the content of CaO 1.2 -1.6 times that of MgO;
The thickness difference of the said substrate glass is less than 0.3mm;
The water absorption of the said substrate glass goes between 0- 0.3%;
The flexural strength of the said substrate glass is up to 50-180Mpa;
The lower limit of annealing temperature (endothermic peak threshold temperature) of the said substrate glass goes between 550°C-710°C.

2. The colored glazing flat glass which features high annealing temperature, high strength, environmental protection, energy saving and low melting point as set forth in Claim 1, whose substrate glass of its product is **characterized in that**: calculated as per weight percentage, the content of Al₂O₃ is 0.01-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-710°C; when the viscosity is 10^{0.5} Pa·s, the temperature of the said substrate glass is 1,500°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,070°C-1,230°C; the flexural strength of the said substrate glass is 50-180Mpa.

3. The colored glazing flat glass which features high annealing temperature, high strength, environmental protection, energy saving and low melting point as set forth in Claim 1, whose substrate glass of its product is **characterized in that**: calculated as per weight percentage, the content of Al₂O₃ is 8-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,520°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,070°C-1,230°C; the flexural strength of the said substrate glass is 75-180Mpa.

4. The colored glazing flat glass which features high annealing temperature, high strength, environmental protection, energy saving and low melting point as set forth in Claim 1, whose substrate glass of its product is **characterized in that**: calculated as per weight percentage, the content of Al₂O₃ is 19-30%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,500°C-1,640°C; when the viscosity is 10¹ Pa·s, the temperature of the said substrate glass is 1,450°C-1,580°C; when the viscosity is 10² Pa·s, the temperature of the said substrate glass is 1,210°C-1,350°C; when the viscosity is 10³ Pa·s, the temperature of the said substrate glass is 1,080°C-1,230°C; the flexural strength of the said substrate glass is 130-180Mpa.

5. The colored glazing flat glass which features high annealing temperature, high strength, environmental protection, energy saving and low melting point as set forth in Claim 1, whose substrate glass of its product is **characterized in that**: calculated as per weight percentage, the content of Al₂O₃ is 0.01-19%, SiO₂ is 2.0-3.6 times that of CaO, CaO is 1.3-1.49 times that of MgO, the content of Na₂O is 0.01-2%, the content of B₂O₃ is 0-1%, and the content of F₂O is 0-1%; the lower limit of annealing temperature (endothermic peak threshold temperature) of the said substrate glass goes between 610°C-680°C; when the viscosity is 10^{0.5} Pa·s, the temperature of the said substrate glass is 1,500°C-1,580°C; when the viscosity is 10¹ Pa·s, the temperature of the said substrate glass is 1,450°C-1,520°C; when the viscosity is 10² Pa·s, the temperature of the said substrate glass is 1,210°C-1,310°C; when the viscosity is 10³ Pa·s, the temperature of the said substrate glass is 1,070°C-1,160°C; the flexural strength of the said substrate glass is 50-145Mpa.

6. The colored glazing flat glass which features high annealing temperature, high strength, environmental protection, energy saving and low melting point as set forth in Claim 1, whose substrate glass of its product is **characterized in that**:
(1) Calculated as per weight percentage, in its substrate glass contents: ① MgO is 7-20%,② the content of CaO is 1.0-1.8 time(s) that of MgO, ③ SiO₂ is 2.6-5.6 times that of MgO, ④ SiO₂ is 2.2-3.8 times that of CaO, ⑤Al₂O₃ is 0.1-30%, ⑥ Na₂O is 0-18%; ⑦BaO is 0-5%;
(2) The strain point temperature of the substrate glass of its product goes between 560°C-720°C;
(3) The water absorption of the substrate glass of its product goes between 0-0.001%;
(4) Calculated as per weight percentage, the total content of MgO, CaO and SiO₂ in the substrate glass of its product is 51%-100%.

7. The preparation method for a colored glazing flat glass which features high annealing temperature, high strength, environmental protection, energy saving and low melting point as set forth in any of Claims 1 to 6, **characterized in that**:
Step 1: all preset and indispensable compositions in a special scope such as Na₂O, Fe₂O₃, Al₂O₃, SiO₂, CaO, MgO or TiO₂ and BaO and raw materials whose special ratios are preset among SiO₂, CaO and MgO in the innovative technical solution are configured by the substrate glass compositions of its product as set forth in any of Claims 1 to 5, after being mixed and stirred, they are melted under the melting temperature for each glass formula to form the liquid glass with controllable viscosity and optimized low viscosity, then they are homogenized and clarified and discharge bubbles to form flowing molten mass;
Step 2: the glass is molded by adopting float process, horizontal drawing process, Glaverbel process, calendaring process or overflow process, and the substrate glass of a colored glazing flat glass which features high annealing temperature, high strength, environmental protection, energy saving and low melting point is manufactured after going through the cooling procedure;
Step 3: Print or spread a layer of colored glaze with 1 or 2-10 color(s) and a melting point of 540°C-730°C on the surface of the substrate glass of the formed product to form a decorative layer.

8. The colored glazing flat glass which features high annealing temperature, high strength, environmental protection, energy saving and low melting point as set forth in Claim 1, **characterized in that**: the composite board of its product consists of a colored glazing flat glass which features high annealing temperature, high strength, environmental protection, energy saving and low melting point (1), binding material layer (2) and sheet metal (3) with the thickness of 0.1-1mm or 1-5mm.

9. The colored glazing flat glass which features high annealing temperature, high strength, environmental protection, energy saving and low melting point as set forth in Claim 1, **characterized in that**: calculated as per weight percentage, the content of Al₂O₃ in its substrate glass is less than or equal to 30%; when the viscosity is 10^{0.5}Pa·s, the temperature of the said substrate glass is 1,480°C-1,640°C; when the viscosity is 10¹ Pa·s, the temperature of the said substrate glass is 1,410°C-1,600°C; when the viscosity is 10² Pa·s, the temperature of the said substrate glass is 1,180°C-1,340°C; when the viscosity is 10³ Pa·s, the temperature of the said substrate glass is 1,040°C-1,220°C; the thickness difference of the said substrate glass is less than 0.3mm; the water absorption of the said substrate glass goes between 0- 0.3%; the strain point temperature of the said substrate glass goes between 560°C-720°C; the flexural strength of the said substrate glass is 50-180MPa; the difference of thermal expansion coefficient of the said substrate glass is 1.0-3.0ppm between 150°C-300°C; the difference of thermal expansion coefficient of the said substrate glass is 1.0-2.8ppm between 550°C-600°C.

10. The colored glazing flat glass which features high annealing temperature, high strength, environmental protection, energy saving and low melting point as set forth in Claim 1, **characterized in that**: the surface layer of the glaze layer contains 20-70% quartz crystal or Al₂O₃ crystal.
